# EUROPEAN PATENT APPLICATION

(11) **EP 4 521 783 A1**
(43) Date of publication of application: **12.03.2025**
(21) Application number: 23810765.0
(22) Date of filing: 28.04.2023
(51) Int. Cl.: H04W 4/06

(54) **COMMUNICATION METHOD AND COMMUNICATION APPARATUS**

(30) Priority: 26.05.2022 CN 202210580782
(71) Applicant: Huawei Technologies Co., Ltd., Shenzhen, Guangdong 518129 (CN)
(72) Inventor: ZHANG, Haisen, Shenzhen, Guangdong 518129 (CN); LI, Bingzhao, Shenzhen, Guangdong 518129 (CN)
(74) Representative: Maiwald GmbH
(86) International application number: PCT/CN2023/091506
(87) International publication number: WO 2023/226692

(57) **Abstract**

A communication method and a communication apparatus are disclosed. The method includes: For a terminal device that enters a non-connected mode, when a network device pages the terminal device to receive a first multicast service, the network device may further indicate whether to provide the first multicast service for the terminal device in an RRC non-connected mode. The terminal device may perform at least one of the following based on the paging and indication of the network device: receiving the first multicast service in the RRC non-connected mode; or performing an RRC connection control procedure. According to the method, network congestion caused by simultaneous access of a large quantity of terminal devices can be avoided, and access of the terminal devices can be effectively managed.

## Description

This application claims priority to Chinese Patent Application No. 202210580782.5, filed with the China National Intellectual Property Administration on May 26, 2022 and entitled "COMMUNICATION METHOD AND COMMUNICATION APPARATUS", which is incorporated herein by reference in its entirety.

### TECHNICAL FIELD

Embodiments of this application relate to the communication field, and more specifically, to a communication method and a communication apparatus.

### BACKGROUND

Multicast and broadcast services (multicast and broadcast service, MBS) are classified into two types: a broadcast service and a multicast service. When network congestion occurs, for a terminal device that receives a multicast service, a network device may release the terminal device from a radio resource control (radio resource control, RRC) connected mode to an RRC non-connected mode, so that the terminal device receives the multicast service in the RRC non-connected mode. When the network congestion is relieved, the network device may send a paging message to page a plurality of terminal devices that receive the multicast service in the RRC non-connected mode to enter the connected mode. The plurality of paged terminal devices may simultaneously perform an RRC connection setup procedure or an RRC connection resume procedure. However, when a large quantity of terminal devices simultaneously access a network, network congestion is caused.

### SUMMARY

Embodiments of this application provide a communication method and a communication apparatus, to more effectively manage access of a terminal device.

According to a first aspect, a communication method is provided. The method may be performed by the terminal device, or may be performed by a component (such as a chip or a circuit) of the terminal device. This is not limited herein. For ease of description, the following uses an example in which the method is performed by the terminal device for description.

The method may include: The terminal device receives a group paging message from a network device, where the group paging message includes first information, the first information is used to page a group of terminal devices to receive a first multicast service, and the group of terminal devices include the terminal device; and the terminal device performs at least one of the following based on the first information and second information, where the second information indicates whether the network device provides the first multicast service for the group of terminal devices in a radio resource control RRC non-connected mode: receiving the first multicast service in the RRC non-connected mode; or performing an RRC connection control procedure.

In the foregoing technical solution, the terminal device is notified whether to provide the first multicast service in the RRC non-connected mode, so that some terminal devices can enter the RRC non-connected mode to receive multicast services, and some terminal devices can enter an RRC connected mode to receive multicast services. An access control procedure is enhanced, so that network congestion caused by simultaneous access of a large quantity of terminal devices after receiving paging messages can be avoided, and access of the terminal devices can be effectively managed.

In some implementations of the first aspect, that the terminal device determines, based on the first information and second information, to receive the first multicast service in the RRC non-connected mode includes: The terminal device receives the first multicast service in the RRC non-connected mode if the second information indicates that the network device provides the first multicast service for the group of terminal devices in the RRC non-connected mode; or the terminal device initiates an access control procedure based on the first information, and the terminal device receives the first multicast service in the RRC non-connected mode if the terminal device is not allowed to access the network device, and the second information indicates that the network device provides the first multicast service for the group of terminal devices in the RRC non-connected mode.

In some implementations of the first aspect, the terminal device does not initiate the access control procedure if the second information indicates that the network device provides the first multicast service for the terminal device in the non-connected mode.

In some implementations of the first aspect, that the terminal device determines, based on the first information and second information, to receive the first multicast service in the RRC non-connected mode includes: the terminal device performs the RRC connection control procedure if the second information indicates that the network device does not provide the first multicast service for the group of terminal devices in the RRC non-connected mode; or the terminal device initiates an access control procedure based on the first information, and the terminal device performs the RRC connection control procedure if the terminal device is allowed to access the network device.

In some implementations of the first aspect, the second information is carried in the group paging message, or the second information is carried on a multicast control channel.

In some implementations of the first aspect, if the terminal device is not allowed to access the network device, the method further includes: If the terminal device monitors, within running time of a first timer, a physical downlink control channel PDCCH corresponding to a multicast control channel to obtain configuration information of the first multicast service, the terminal device exits the access control procedure, or the terminal device stops initiating the access control procedure after the first timer expires.

In some implementations of the first aspect, if the terminal device is not allowed to access the network device, the method further includes: If the terminal device does not obtain the configuration information of the first multicast service by monitoring, within the running time of the first timer, the PDCCH of the multicast control channel, the terminal device re-initiates the access control procedure after the first timer expires, where the running time of the first timer is duration that the terminal device needs to wait before initiating the access control procedure again after the terminal device is not allowed to access the network device.

In some implementations of the first aspect, if the terminal device is not allowed to access the network device, the method further includes: If the terminal device obtains the configuration information of the first multicast service by monitoring, within the running time of the first timer, the physical downlink control channel PDCCH corresponding to the multicast control channel, the terminal device receives the first multicast service in the RRC non-connected mode, but does not stop the first timer, and re-initiates the access control procedure after the first timer expires, where the running time of the first timer is duration that the terminal device needs to wait before initiating the access control procedure again after the terminal device is not allowed to access the network device.

In some implementations of the first aspect, if the terminal device is not allowed to access the network device, the method further includes: If the group paging message includes the second information, and the second information indicates that the network device provides the first multicast service for the terminal device in the non-connected mode, the terminal device exits the access control procedure, or the terminal device skips starting the first timer, or the terminal device stops initiating the access control procedure after the first timer expires, where the running time of the first timer is the duration that the terminal device needs to wait before initiating the access control procedure again after the terminal device is not allowed to access the network device.

According to a second aspect, a communication method is provided. The method may be performed by a network device, or may be performed by a component (such as a chip or a circuit) of the network device. This is not limited herein. For ease of description, the following uses an example in which the method is performed by the network device for description.

The method may include: The network device sends a group paging message to a terminal device, where the group paging message includes first information, the first information is used to page a group of terminal devices to receive a first multicast service, and the group of terminal devices include the terminal device, where the network device sends second information to the terminal device, where the second information indicates whether the network device provides the first multicast service for the group of terminal devices in a radio resource control RRC non-connected mode.

In some implementations of the second aspect, the second information is carried in the group paging message, or the second information is carried on a multicast control channel.

For an effect corresponding to the second aspect, refer to descriptions of the effect in the first aspect. Details are not described herein again.

According to a third aspect, a communication method is provided. The method may be performed by a terminal device, or may be performed by a component (such as a chip or a circuit) of the terminal device. This is not limited herein. For ease of description, the following uses an example in which the method is performed by the terminal device for description.

The method may include: joining a multicast service when a terminal device is in a radio resource control RRC connected mode; receiving first information from a network device when the terminal device is in the RRC connected mode, where the first information indicates a multicast radio bearer MRB configuration, and the MRB configuration is an MRB configuration used by the terminal device to receive the multicast service in an RRC non-connected mode; and the terminal device determines the MRB configuration based on the first information.

In the foregoing technical solution, the MRB configuration used to receive the multicast service when the terminal device is released to the non-connected mode is specified. Therefore, before being released to the non-connected mode, the terminal device may earlier determine the MRB configuration used to receive the multicast service in the non-connected mode, so that continuity of receiving the multicast service in the process in which the terminal device is released to the non-connected mode is facilitated.

In some implementations of the third aspect, second information from the network device is received when the terminal device is in the RRC connected mode, where the second information indicates the terminal device to receive the multicast service in the RRC non-connected mode; the terminal device enters the RRC non-connected mode; and when the terminal device is in the RRC non-connected mode, the multicast service is received by using the determined MRB configuration.

For example, the second information may be carried in an RRC release (release) message, and the RRC release message indicates the terminal device to enter the RRC non-connected mode. In addition, the terminal device may still receive, based on the second information, the multicast service after entering the non-connected mode. In this application, the second information may also be understood as that a reason why the terminal device releases an RRC connection is receiving the multicast service in the RRC non-connected mode.

In some implementations of the third aspect, the first information is used to trigger the terminal device to obtain the MRB configuration, and that the terminal device determines the MRB configuration based on the first information includes: The terminal device monitors, based on the first information, a physical downlink control channel PDCCH corresponding to a multicast control channel; and the terminal device determines the MRB configuration carried on the multicast control channel.

In some implementations of the third aspect, the first information indicates the terminal device to receive, when the terminal device is in the RRC non-connected mode, the multicast service by using an MRB configuration used by the terminal device to receive the multicast service in the RRC connected mode. That the terminal device determines the MRB configuration based on the first information includes: The terminal device determines, based on the first information, that the MRB configuration used by the terminal device to receive the multicast service in the RRC connected mode is the MRB configuration.

According to a fourth aspect, a communication method is provided. The method may be performed by a network device, or may be performed by a component (such as a chip or a circuit) of the network device. This is not limited herein. For ease of description, the following uses an example in which the method is performed by the network device for description.

The method may include: The network device determines that a terminal device joins a multicast service; and the network device sends first information to the terminal device in a radio resource control RRC connected mode, where the first information indicates a multicast radio bearer MRB configuration, and the MRB configuration is an MRB configuration used by the terminal device to receive the multicast service in an RRC non-connected mode.

In some implementations of the fourth aspect, the method further includes: The network device sends second information to the terminal device, where the fourth information indicates the terminal device to enter the RRC non-connected mode to receive the multicast service.

In some implementations of the fourth aspect, the first information is used to trigger the terminal device to obtain the MRB configuration, and the method further includes: The network device sends the MRB configuration to the terminal device, where the MRB configuration is carried in multicast control channel information.

In some implementations of the fourth aspect, that the network device sends first information to the terminal device in an RRC connected mode includes: The network device determines that the MRB configuration is an MRB configuration used by the terminal device to receive the multicast service in the RRC connected mode; and the network device sends the first information to the terminal device in the connected mode, where the first information indicates the terminal device to receive, when the terminal device is in the RRC non-connected mode, the multicast service by using the MRB configuration used by the terminal device to receive the multicast service in the RRC connected mode.

In some implementations of the fourth aspect, the method further includes: The network device receives first indication information from a core network device, where the first indication information indicates priorities of one or more terminal devices; and the network device determines, based on the first indication information, a terminal device that needs to be released to the non-connected mode to receive the multicast service.

For an effect corresponding to the fourth aspect, refer to descriptions of the effect in the third aspect. Details are not described herein again.

According to a fifth aspect, a communication apparatus is provided. The apparatus is configured to perform the method provided in the first aspect or the second aspect. Specifically, the apparatus may include units and/or modules configured to perform the method in the first aspect or the second aspect and any possible implementation of the first aspect or the second aspect, for example, a processing unit and/or a communication unit.

In an implementation, the apparatus is a terminal device. When the apparatus is the terminal device, the communication unit may be a transceiver or an input/output interface; and the processing unit may be at least one processor. Optionally, the transceiver may be a transceiver circuit. Optionally, the input/output interface may be an input/output circuit.

In another implementation, the apparatus is a chip, a chip system, or a circuit used in the terminal device. When the apparatus is the chip, the chip system, or the circuit used in the terminal device, the communication unit may be an input/output interface, an interface circuit, an output circuit, an input circuit, a pin, a related circuit, or the like on the chip, the chip system, or the circuit; and the processing unit may be the at least one processor, a processing circuit, a logic circuit, or the like. It may be understood that, when the apparatus is the chip, the chip system, or the circuit used in the terminal device, the terminal device in the method in the first aspect or the second aspect and any possible implementation of the first aspect or the second aspect is the apparatus.

According to a sixth aspect, a communication apparatus is provided. The apparatus is configured to perform the method provided in the third aspect or the fourth aspect. Specifically, the apparatus may include units and/or modules configured to perform the method in the third aspect or the fourth aspect and any possible implementation of the third aspect or the fourth aspect, for example, a processing unit and/or a communication unit.

In an implementation, the apparatus is a network device. When the apparatus is the network device, the communication unit may be a transceiver or an input/output interface; and the processing unit may be at least one processor. Optionally, the transceiver may be a transceiver circuit. Optionally, the input/output interface may be an input/output circuit.

In another implementation, the apparatus is a chip, a chip system, or a circuit used in the network device. When the apparatus is the chip, the chip system, or the circuit used in the network device, the communication unit may be an input/output interface, an interface circuit, an output circuit, an input circuit, a pin, a related circuit, or the like on the chip, the chip system, or the circuit; and the processing unit may be the at least one processor, a processing circuit, a logic circuit, or the like. It may be understood that, when the apparatus is the chip, the chip system, or the circuit used in the network device, the terminal device in the method in the third aspect or the fourth aspect and any possible implementation of the third aspect or the fourth aspect is the apparatus.

According to a seventh aspect, a communication apparatus is provided. The apparatus includes: at least one processor, where the at least one processor is coupled to at least one memory, the at least one memory is configured to store a computer program or instructions, and the at least one processor is configured to invoke the computer program or the instructions from the at least one memory and run the computer program or the instructions, to enable the communication apparatus to perform the method in the first aspect or the second aspect and any possible implementation of the first aspect or the second aspect.

In an implementation, the apparatus is a terminal device.

In another implementation, the apparatus is a chip, a chip system, or a circuit used in the terminal device. It may be understood that, when the apparatus is the chip, the chip system, or the circuit used in the terminal device, the terminal device in the method in the first aspect or the second aspect and any possible implementation of the first aspect or the second aspect is the apparatus.

According to an eighth aspect, a communication apparatus is provided. The apparatus includes: at least one processor, where the at least one processor is coupled to at least one memory, the at least one memory is configured to store a computer program or instructions, and the at least one processor is configured to invoke the computer program or the instructions from the at least one memory and run the computer program or the instructions, to enable the communication apparatus to perform the method in the third aspect or the fourth aspect and any possible implementation of the third aspect or the fourth aspect.

In an implementation, the apparatus is a network device.

In another implementation, the apparatus is a chip, a chip system, or a circuit used in the network device. It may be understood that, when the apparatus is the chip, the chip system, or the circuit used in the network device, the terminal device in the method in the third aspect or the fourth aspect and any possible implementation of the third aspect or the fourth aspect is the apparatus.

According to a ninth aspect, this application provides a processor, configured to perform the method provided in the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a tenth aspect, a computer-readable storage medium is provided. The computer-readable storage medium stores program code to be executed by a device, and the program code is used to perform the method in the first aspect, the second aspect, the third aspect, or the fourth aspect, and any possible implementation of the first aspect, the second aspect, the third aspect, or the fourth aspect.

According to an eleventh aspect, a computer program product including instructions is provided. When the computer program product runs on a computer, the computer is enabled to perform the method in the first aspect, the second aspect, the third aspect, or the fourth aspect, and any possible implementation of the first aspect, the second aspect, the third aspect, or the fourth aspect.

According to a twelfth aspect, a chip is provided. The chip includes a processor and a communication interface. The processor reads, via the communication interface, instructions stored in a memory, to perform the method in the first aspect, the second aspect, the third aspect, or the fourth aspect, and any possible implementation of the first aspect, the second aspect, the third aspect, or the fourth aspect.

Optionally, in an implementation, the chip further includes the memory. The memory stores a computer program or instructions. The processor is configured to execute the computer program or the instructions stored in the memory. When the computer program or the instructions are executed, the processor is configured to perform the method in the first aspect, the second aspect, the third aspect, or the fourth aspect, and any possible implementation of the first aspect, the second aspect, the third aspect, or the fourth aspect.

According to a thirteenth aspect, a communication system is provided. The communication system includes the communication apparatus shown in the seventh aspect and the eighth aspect.

### BRIEF DESCRIPTION OF DRAWINGS

FIG. 1 is a diagram of a communication system according to an embodiment of this application;
FIG. 2 is a diagram of an MBS service transmission process;
FIG. 3 is a diagram of a multicast service transmission process;
FIG. 4 is a diagram of a specific MCCH sending mechanism;
FIG. 5 is a diagram of an MBS session deactivation procedure;
FIG. 6 is a diagram of an MBS session activation procedure;
FIG. 7 is a diagram of an MBS session release procedure;
FIG. 8 is a diagram of a radio access network protocol stack structure;
FIG. 9 is a diagram of three MRB types;
FIG. 10 is a schematic flowchart of RRC connection setup;
FIG. 11 is a schematic flowchart of RRC connection resume;
FIG. 12 is a schematic flowchart of a communication method according to this application;
FIG. 13 is a schematic flowchart of another communication method according to this application;
FIG. 14 is a schematic flowchart of performing access control by a terminal device in a non-connected mode according to this application;
FIG. 15 is another schematic flowchart of performing access control by a terminal device in a non-connected mode according to this application;
FIG. 16 is still another schematic flowchart of performing access control by a terminal device in a non-connected mode according to this application;
FIG. 17 is a block diagram of a communication apparatus 1000 according to this application; and
FIG. 18 is a diagram of a structure of a communication apparatus 10 according to this application.

### DESCRIPTION OF EMBODIMENTS

The following describes technical solutions of embodiments of this application with reference to accompanying drawings.

The technical solutions in embodiments of this application may be applied to various communication systems, for example, long term evolution (long term evolution, LTE), 5th generation (5th generation, 5G), new radio (new radio, NR), internet of things (internet of things, IoT), wireless-fidelity (wireless-fidelity, Wi-Fi), wireless communication related to the 3rd generation partnership project (3rd generation partnership project, 3GPP), or other wireless communication that may appear in the future.

The technical solutions provided in this application may be further applied to machine-type communication (machine-type communication, MTC), a device-to-device (device-to-device, D2D) network, a machine-to-machine (machine-to-machine, M2M) network, an internet of things (internet of things, IoT) network, or another network.

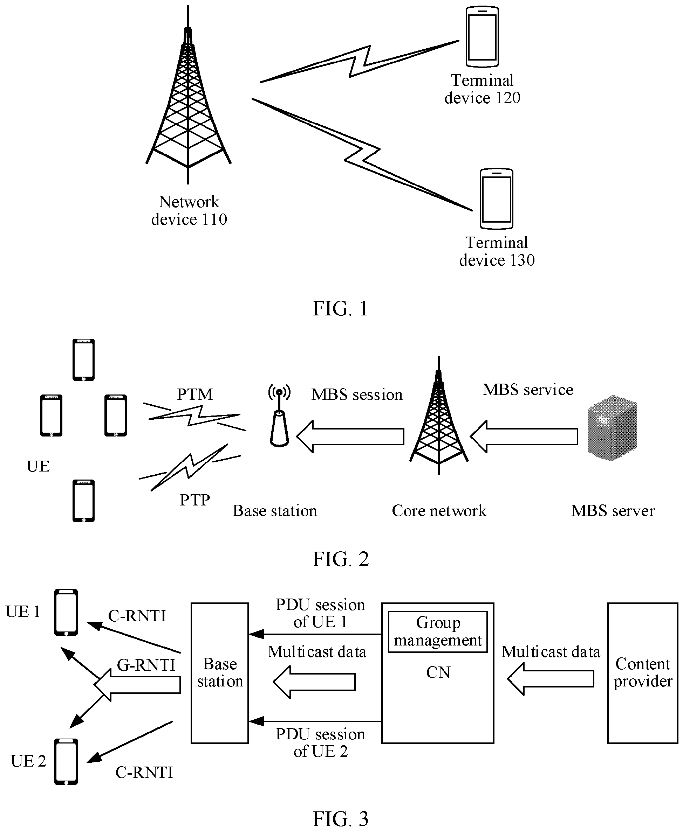

FIG. 1 is a diagram of a communication system according to an embodiment of this application. The communication system includes at least one network device, for example, a network device 110 shown in FIG. 1. The communication system 100 may further include at least one terminal device, for example, a terminal device 120 and/or a terminal device 130 shown in FIG. 1. The network device 110 may communicate with the terminal device 120/130 via a radio link, to exchange information. It may be understood that, the network device and the terminal device may also be referred to as communication devices.

The network device is a network side device having a wireless transceiver function. The network device may be an apparatus that is in a radio access network (radio access network, RAN) and that provides a wireless communication function for the terminal device, and is referred to as a RAN device. For example, the network device may be a base station (base station), an evolved NodeB (evolved NodeB, eNodeB), a next generation NodeB (next generation NodeB, gNB) in a 5G mobile communication system, a subsequent evolved 3GPP base station, a transmission reception point (transmission reception point, TRP), an access node in a Wi-Fi system, a wireless relay node, or a wireless backhaul node. In communication systems using different radio access technologies (radio access technologies, RAT), names of devices having base station functions may be different. For example, a base station may be referred to as an eNB or an eNodeB in an LTE system, and may be referred to as a gNB in a 5G system or an NR system. A specific name of the base station is not limited in this application. The network device may include one or more co-site or non-co-site transmission reception points. For another example, the network device may include one or more central units (central units, CU), one or more distributed units (distributed units, DU), or one or more CUs and one or more DUs. For example, functions of the CU may be implemented by one entity or different entities. For example, the functions of the CU are further divided. In other words, a control plane and a user plane are separated and implemented by different entities, which are respectively a control plane CU entity (namely, a CU-CP entity) and a user plane CU entity (namely, a CU-UP entity). The CU-CP entity and the CU-UP entity may be coupled to the DU, to jointly complete a function of an access network device. For example, the CU is responsible for processing a non-real-time protocol and a non-real-time service, and implementing functions of a radio resource control (radio resource control, RRC) layer and a packet data convergence protocol (packet data convergence protocol, PDCP) layer. The DU is responsible for processing a physical layer protocol and a real-time service, and implementing functions of a radio link control (radio link control, RLC) layer, a media access control (media access control, MAC) layer, and a physical (physical, PHY) layer. In this way, some functions of a radio access network device may be implemented by a plurality of network function entities. These network function entities may be network elements in a hardware device, or may be software functions run on dedicated hardware, or may be virtualized functions instantiated on a platform (for example, a cloud platform). The network device may further include an active antenna unit (active antenna unit, AAU for short). The AAU implements some physical layer processing functions, and functions related to radio frequency processing and the active antenna. Information at the RRC layer finally becomes information at the PHY layer, or is converted from information at the PHY layer. Therefore, in this architecture, higher layer signaling such as RRC layer signaling may also be considered to be sent by the DU, or sent by the DU and the AAU. It may be understood that, the network device may be a device including one or more of a CU node, a DU node, and an AAU node. In addition, the CU may be classified as a network device in an access network (radio access network, RAN), or the CU may be classified as a network device in a core network (core network, CN). This is not limited in this application. For another example, in a vehicle-to-everything (vehicle-to-everything, V2X) technology, the access network device may be a road side unit (road side unit, RSU). A plurality of access network devices in the communication system may be base stations of a same type, or may be base stations of different types. The base station may communicate with the terminal device, or may communicate with the terminal device via a relay station. In embodiments of this application, the apparatus configured to implement a function of the network device may be the network device, or may be an apparatus that can support the network device in implementing the function, for example, a chip system or a combined component or component that can implement a function of the access network device. The apparatus may be installed in the network device. In embodiments of this application, the chip system may include a chip, or may include a chip and another discrete component.

The terminal device is a user side device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect people, things, machines, and the like, and may be widely used in various scenarios, for example, cellular communication, device-to-device (device-to-device, D2D) communication, V2X communication, machine-to-machine/machine-type communication (machine-to-machine/machine-type communication, M2M/MTC) communication, internet of things, virtual reality (virtual reality, VR), augmented reality (augmented reality, AR), industrial control (industrial control), self-driving (self-driving), remote medical (remote medical), a smart grid (smart grid), smart furniture, smart office, smart wearable, smart transportation, a smart city (smart city), an uncrewed aerial vehicle, and a robot. For example, the terminal device may be a handheld terminal in the cellular communication, a communication device in the D2D communication, an internet of things device in the MTC, a surveillance camera in the smart transportation and the smart city, or a communication device in the uncrewed aerial vehicle. The terminal device may be sometimes referred to as user equipment (user equipment, UE), a user terminal, a user apparatus, a subscriber unit, a subscriber station, a terminal, an access terminal, an access station, a UE station, a remote station, a mobile device, a wireless communication device, or the like. In embodiments of this application, the apparatus configured to implement a function of the terminal device may be the terminal device, or may be an apparatus that can support the terminal device in implementing the function, for example, a chip system or a combined component or component that can implement a function of the terminal device. The apparatus may be installed in the terminal device. For ease of description, the terminal device is used as an example for description in this application.

To facilitate understanding of the technical solutions in this application, related concepts in embodiments of this application are briefly described.

### 1. RRC mode

There are three RRC modes in NR: an RRC idle (RRC_IDLE) mode, an RRC inactive (RRC _INACTIVE) mode, and an RRC connected (RRC_CONNECTED) mode. The following briefly describes the three RRC modes.
① RRC_CONNECTED (RRC connected mode): A RAN has a context of a UE, and the UE has a signaling connection with the RAN. The UE may receive a system message and a message that is delivered by the RAN and that is used to control the UE to perform data transmission and handover and notify the UE of related scheduling information, and the RAN may receive channel quality information fed back by the UE.
② RRC_INACTIVE (RRC inactive mode): A connection between the RAN and a core network is maintained, and no resource is allocated to an air interface, so that services can be quickly restored, and experience of a delay-sensitive application is improved. In addition, a power saving effect of a user terminal in the inactive mode is close to that in the idle mode. This prolongs a battery life of the mobile phone.
③ RRC_IDLE (RRC idle mode): The RAN does not have the context of the UE, and the UE does not have a signaling connection with the RAN. In this mode, the UE can receive a system message and a paging message for cell selection and reselection. When the UE needs to set up a connection with a network for a specific purpose (such as a service request, location update, and paging), an RRC connection setup is triggered. After the RRC connection is set up, the UE enters the RRC connected mode.

It should be understood that, an RRC non-connected mode in this application may be the RRC idle mode and/or the RRC inactive mode. The non-connected mode in this application may be replaced with the RRC idle mode and/or the RRC inactive mode.

In addition, a UE connection management (connection management, CM) mode includes an idle mode (CM-IDLE), a connected mode with an inactive mode (CM-CONNECTED with RRC_INACTIVE), and a connected mode (CM-CONNECTED). It should be understood that, in the CM-IDLE mode, the UE does not establish a signaling connection with the core network. For example, in the RRC_IDLE mode, the UE moves between different cells through cell reselection. In the CM-CONNECTED mode, the UE establishes a signaling connection with the core network, for example, the RRC_CONNECTED mode and the RRC_INACTIVE mode.

### 2. Multicast and broadcast service (multicast and broadcast service, MBS)

The MBS is a service oriented to a plurality of UEs, for example, a live broadcast service, a scheduled program playing service, and a batch software update service. From a perspective of an end-to-end management and control procedure and a transmission manner, the MBS designed for NR is classified into two types: a broadcast service and a multicast service. As shown in FIG. 2, the MBS comes from a data server. First, the data server sends MBS data to a core network device, then the core network device sends the MBS data to a base station, and finally the base station sends the MBS data to at least one UE that receives the MBS. When the core network device sends the MBS data to the base station, the MBS data is transmitted through a public transmission channel MBS session (session), and each MBS session may include at least one MBS quality of service (quality of service, QoS) flow. When the base station sends the MBS data to the UE, the MBS data is transmitted through an MBS radio bearer. For one MBS radio bearer, there are two transmission manners: first, a point to multi-point (point to multi-point, PTM) transmission manner; and second, a point to point (point to point, PTP) transmission manner.

### 3. Multicast (multicast) service

The multicast service is designed for a service with a high QoS requirement. The multicast service can provide a QoS level the same as that of a unicast service. In an existing protocol, the multicast service can be provided only for a UE in a radio resource control RRC connected mode, and an access network device and a core network device need to maintain UE information corresponding to a multicast service group. Specifically, for the multicast service, a core network needs to manage joining and exiting of a UE. Control signaling between the core network and a base station relies on a protocol data unit (protocol data unit, PDU) session, and a new MBS QoS flow (flow) is introduced. The base station supports sending of data to the UE in two manners, namely, PTP and PTM, and supports dynamic switching that is between the PTP and the PTM and that is controlled by the base station. As shown in FIG. 3, the base station may transmit the same multicast service to a plurality of UEs by using a group radio network temporary identifier (group radio network temporary identifier, G-RNTI), that is, perform PTM transmission. In addition, the base station may further allocate a corresponding cell radio network temporary identifier (cell radio network temporary identifier, C-RNTI) to each UE, where the C-RNTI is used to perform PTP transmission when necessary. The multicast service further supports deactivation or activation of an MBS session that is triggered by the core network. The UEs are unaware of a service mode.

### 4. Broadcast (broadcast) service

The broadcast service is designed for a service with a low QoS requirement. The broadcast service supports a UE in any RRC mode. A core network and a base station do not need to maintain a UE group that receives a related broadcast service. When a broadcast service is being provided, the UE autonomously receives the broadcast service based on configuration information. Similar to a multicast service, the broadcast service is designed only for a downlink (downlink, DL). Different from the multicast service, the broadcast service supports only a PTM transmission manner. For the UE, a configuration for receiving the broadcast service is completely independent of a configuration for receiving the multicast service.

### 5. Multicast control channel and multicast traffic channel

Two logical channels, namely, a multicast control channel (MBS control channel, MCCH) and a multicast traffic channel (MBS traffic channel, MTCH), are introduced into a broadcast technology of an NR MBS. The MCCH is used to transmit control information, the MCCH periodically sends the control information, MBS broadcast configuration information is carried on the MCCH, and the MBS broadcast configuration information is configuration information of the MTCH. For example, the configuration information of the MTCH includes configurations necessary for receiving a broadcast service, such as a G-RNTI corresponding to the MTCH and a temporary multicast group identifier (temporary multicast group identifier, TMGI). The MTCH carries user data of the broadcast service. The MTCH is scheduled through the MCCH. The MTCH is configured per (per) G-RNTI, that is, per MBS. The base station may simultaneously schedule service data to a plurality of UEs through the G-RNTI, and each G-RNTI may be associated with at least one broadcast service.

It should be understood that, in different communication systems, the foregoing channels may correspond to different names. For example, in a 4th generation (4th generation, 4G) communication system, the multicast control channel may be a single cell multicast traffic control channel (single cell MCCH, SC-MCCH). For another example, in a 5G communication system, the multicast control channel may be an MC-MCCH. In a future technology development process, a channel having a function similar to that of the multicast traffic control channel may have another name, or in different communication environments, communication scenarios, or communication technologies, channels having a same function may have different names. However, different names of channels having similar functions or the same function in different systems constitute no limitation on channel content and functions. The multicast control channel in this application may be used to transmit control information, and the multicast traffic channel may be used to transmit user data.

### 6. Multicast control channel change notification (MCCH change notification)

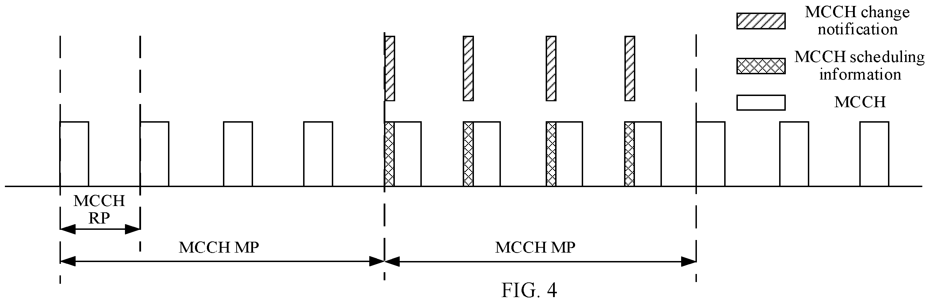

As shown in FIG. 4, an MCCH is repeatedly sent in each modification period (modification period, MP), and a repetition period (repetition period, RP) is included in the figure. In one MP, content of the MCCH is the same. When MCCHs in different MPs change, a network device sends a physical downlink control channel (physical downlink control channel, PDCCH), where the PDCCH includes an MCCH change notification (change notification). When a UE detects, on the PDCCH, a field corresponding to the MCCH change notification, for example, 2 bits, it is considered that the content of the MCCH changes, and the UE re-obtains the MCCH. A first bit in the MCCH change notification indicates that a reason for modifying the MCCH is session start, and a second bit in the MCCH change notification indicates that a reason for modifying the MCCH is session modification, session stop, or neighboring cell list update. When obtaining the MCCH, the UE needs to detect a PDCCH scrambled by using an MCCH-RNTI, to obtain scheduling information of the MCCH.

### 7. Multicast session identifier (MBS session ID)

The MBS session ID identifies a multicast and broadcast service. For example, one multicast session identifier may be associated with one multicast and broadcast service. For example, the multicast session identifier may be a TMGI. 8. MBS session deactivation, activation, and release procedure

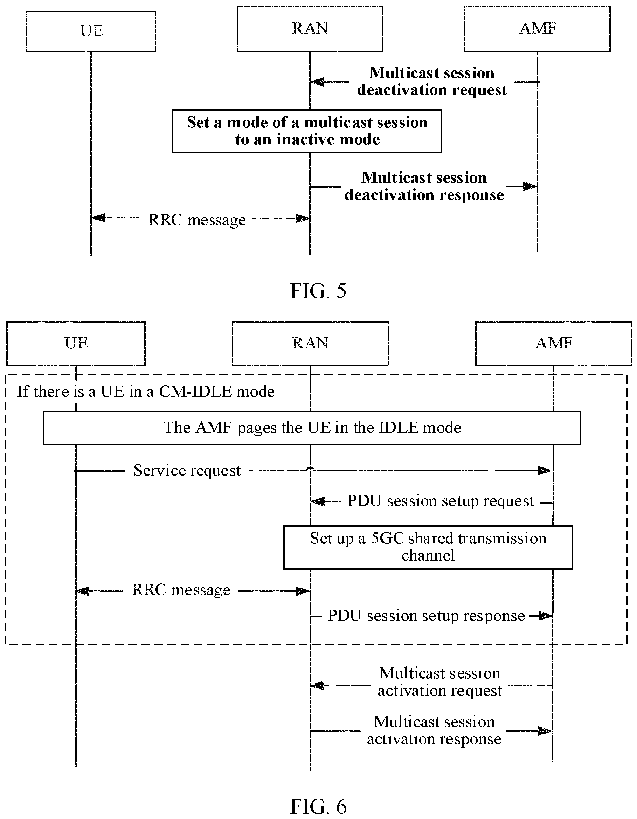

The MBS session deactivation procedure is applicable to multicast. The MBS session deactivation procedure is triggered by a multicast session management function (MB session management function, MB-SMF) network element. When the MB-SMF receives a notification from a user plane function (MB user plane function, MB-UPF) network element when there is no downlink data to be transmitted within a period of time, or when the MB-SMF directly receives a request forwarded by an application layer function (application function, AF) network element or a network exposure function (network exposure function, NEF), the MBS session deactivation procedure is used to deactivate MBS data resources of a 5G access network (NG-RAN) node. As shown in FIG. 5, when triggered by a 5G core network (5GC), for example, an access and mobility management function (access and mobility management function, AMF) network element in FIG. 5 sends a multicast session deactivation request to a RAN, the RAN releases radio resources of a multicast session, and stops transmitting multicast session data to a UE. A multicast session mode changes from an active (active) mode to an inactive (inactive) mode. A base station may release an RRC connection of the UE or may not release an RRC connection of the UE, but the base station does not explicitly notify the UE of the MBS session deactivation.

The MBS session activation process is only applicable to multicast. The MBS session activation process is triggered by the MB-SMF. The MBS session activation procedure is triggered when the MB-SMF receives a notification about MBS downlink data from the MB-UPF, or when the MB-SMF directly receives a request forwarded by the AF or the NEF. The MBS session activation procedure is used to activate MBS data resources of the NG-RAN node, such as radio resources for establishing a multicast session, and transmit multicast session data to the UE. In addition, UEs that join the multicast session and that are in a CM-IDLE mode and a CM-CONNECTED+RRC inactive mode, that is, in an RRC non-connected mode are paged (paged). An activation procedure of these UEs may be triggered by an AF request or a notification about data of the MB-UPF, and a multicast session mode changes from the inactive mode to the active mode. In FIG. 6, a message used by the AMF to page the UE in the CM-IDLE mode may be a group paging message (when the base station supports multicast), or may be a unicast paging message (when the base station does not support multicast and a multicast service is provided in a unicast manner). When the AMF sends a multicast session activation request (multicast session activation request) message to the RAN, a paging procedure of the RAN may be triggered.

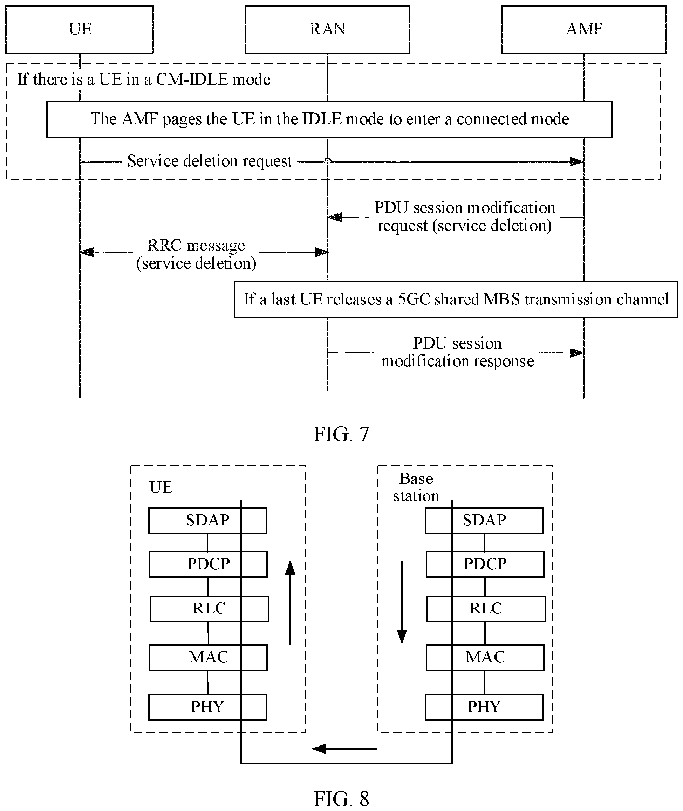

The MBS release procedure is triggered by the core network. When the CN decides to release one multicast service or delete one UE from the multicast service, the procedure shown in FIG. 7 may be performed. As shown in FIG. 7, if the CN determines that there is a UE in the CM-IDLE mode, the CN initiates paging to enable the UE to enter a connected mode. After the UE enters the connected mode, the CN may initiate a PDU session modification request to the RAN. A detailed message that is sent for paging may be a group paging message (when the base station supports the multicast), or may be a unicast paging message (when the base station does not support the multicast and a multicast service is provided in a unicast manner).

It should be understood that, unless otherwise specified in this application, a mode of an MBS may also be understood as a mode of an MBS session, and releasing the MBS may also be understood as releasing the MBS session. In other words, unless otherwise specified in this application, the "service" and the "session" may be replaced with each other.

### 9. Multicast radio bearer (MBS radio bearer, MRB)

A network device and a terminal device have a specific protocol stack structure, to communicate with each other. As shown in FIG. 8, a user plane protocol stack structure may include an RRC layer, a service data adaptation (service data adaptation protocol, SDAP) layer, a PDCP layer, an RLC layer, a MAC layer, a physical (physical, PHY) layer, and the like. The physical layer is located at a lowest layer (layer 1), the MAC layer, the RLC layer, the PDCP layer, and the SDAP layer belong to a second layer (layer 2), and the RRC layer belongs to a third layer (layer 3). For a user plane protocol stack of MBS transmission, data is transmitted in a direction indicated by an arrow in FIG. 8 (for an MBS service, a transmission direction is from a base station to a UE). The data first arrives at the SDAP layer of the base station, and is transmitted to a corresponding PDCP entity after being mapped by the SDAP layer. After being processed by the PDCP layer of the base station, the data is transmitted to the RLC layer and the MAC layer. After corresponding processing, the data is sent from the physical layer, and is transmitted to the UE side through an air interface. Then, each protocol layer on the UE side sequentially performs corresponding processing on a data packet in a processing order reverse to that of the base station. On the base station and the UE side, processing performed on the data packet by each layer may be vividly referred to as a radio bearer (radio bearer, RB) in combination. Each piece of data in the radio bearer needs to be processed by each layer, and each layer has a corresponding functional entity to perform a corresponding function. Each radio bearer configuration includes one PDCP entity, each radio bearer configuration is associated with at least one RLC entity, and each RLC entity corresponds to one logical channel.

It should be understood that, the protocol stack structure described in FIG. 8 is merely an example, and should not constitute a limitation. There may be fewer layers or more layers, functions of some layers may be combined to one of the layers, or a structure change may be performed. This is not limited in this application.

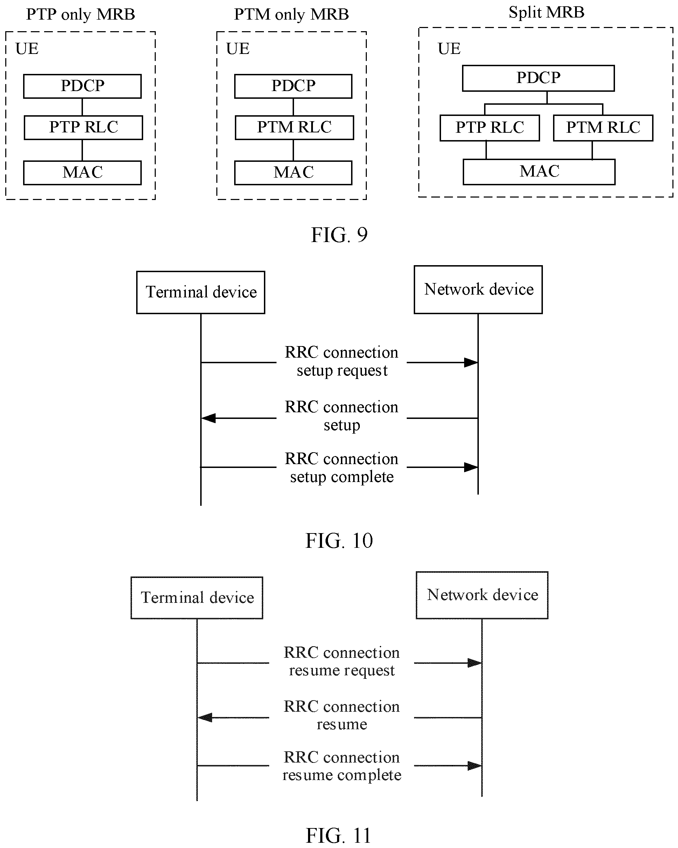

For an MBS, user plane data is carried by the MRB. Specifically, the MRB includes the following three types: a PTP only MRB (PTP only MRB), a PTM only MRB (PTM only MRB), and a split (split) MRB, where the split MRB includes the PTP MRB and the PTM MRB. As shown in FIG. 9, the PTP only MRB is associated with one PTP RLC entity, the PTM only MRB is associated with one PTM RLC entity, and the split MRB is associated with one PTM RLC entity and one PTP RLC entity. The PTM RLC is the same for a plurality of UEs, and the plurality of UEs monitor a PDCCH by using a same G-RNTI. The PTP RLC is independent for each UE, and each UE monitors the PDCCH by using a respective C-RNTI.

It should be understood that, one MBS session corresponds to one or more MRBs, that is, one service may correspond to one or more MRBs.

It should be further understood that, one MRB corresponds to only one G-RNTI, but one G-RNTI may correspond to a plurality of MRBs, and the plurality of MRBs corresponding to one G-RNTI may be MRBs of a same service, or may not be MRBs of a same service.

### 10. Access control

The access control is a solution to control network congestion on a network side. In a possible scenario, when load on the network side is heavy, before initiating RRC connection control, a terminal device needs to perform access control to determine whether the terminal device is allowed to perform access. In this way, some terminal devices may be barred from initiating RRC connection control, to limit network load. Optionally, the terminal device may be barred from initiating RRC connection control access within a timer. The RRC connection control includes an RRC connection setup procedure (a specific procedure is shown in FIG. 10) or an RRC connection resume procedure (a specific procedure is shown in FIG. 11).

Unified access control (unified access control, UAC) is a common access control method in 5G and an LTE system, and a random mechanism of the UAC can separate access occasions of a UE. In the 5G system, the UE may determine, according to a UAC parameter, whether the UE is barred from accessing. The following briefly describes UAC steps.

Step 1: The UE receives, through a system information block (system information block, SIB) 1, a UAC parameter broadcast by a network device.

Step 2: When the UE initiates a service, a non-access stratum (non-access stratum, NAS) of the UE determines one access category (access category, AC) based on a service type of the service for an RRC layer of the UE to perform access determining.

Step 3: The UE determines, based on the AC, whether the UE is barred from accessing.

If a value of the AC is 0, it represents that the UE is allowed to perform access, and the RRC connection control procedure is performed. If a value of the AC is not equal to 0, it represents that the UE is barred from accessing, and step 4 is performed.

Step 4: The UE determines, in the UAC parameter based on the AC, a set of barring parameters (denoted as a parameter #1 herein) corresponding to the AC, where the parameter #1 includes a barring for access identity (barring for access identity), a barring factor (barring factor), and barring time (barring time). The barring factor may be understood as a percentage at which the terminal device is allowed to perform access.

Step 5: The UE determines one access identity (access identity, AI) based on a configuration of the UE. If a bit corresponding to the AI determined by the UE is 0 in the barring for access identity (baring for access identity) of the parameter #1, it represents that the UE is allowed to perform access. If a bit corresponding to the AI determined by the UE is not 0 in the barring for access identity (baring for access identity) of the parameter #1, it represents that the UE is barred from accessing, and access control determining continues to be performed based on the barring factor (barring factor) and barring time (barring time) in the parameter #1.

The two parameters are used as follows. The UE randomly selects a value between [0, 1]. If the random value is less than the barring factor (for example, the barring factor is 50%), it represents that the UE is allowed to perform access. If the random value is greater than or equal to the barring factor (for example, the barring factor is 50%), the UE is barred from accessing. If the UE is barred from accessing, the UE continues to determine duration #1 based on the barring time (for example, the barring time is 128 seconds), and starts the timer. Running time of the timer is the duration #1. The terminal device can initiate UAC access determining again only after the timer expires. For example, the timer may be T390 or T302. T390 is a timer started when an access attempt is barred during access barring check on an access category. T302 is a timer started when the UE receives RRC connection rejection or after receiving the RRC connection rejection for specific duration.

It should be understood that, the foregoing procedure briefly describes only some implementation steps in the UAC procedure. A specific UAC procedure constitutes no limitation on this application, and there may be another AC or a special design that is not mentioned.

When the network congestion occurs, for a UE that receives a multicast service, the network device may release the UE from an RRC connected mode (referred to as a "connected mode" for short in this application) to an RRC non-connected mode (referred to as a "non-connected mode" for short in this application), so that the UE receives the multicast service in the non-connected mode. However, currently, for the UE that is released from the connected mode to the non-connected mode, processing of an MRB when the UE receives the multicast service in the non-connected mode is not specified, and currently, which UE can be released to the non-connected mode to receive the multicast service is also unclear.

In view of this, this application provides a method, to effectively resolve the foregoing technical problem. The following describes in detail the method provided in this application.

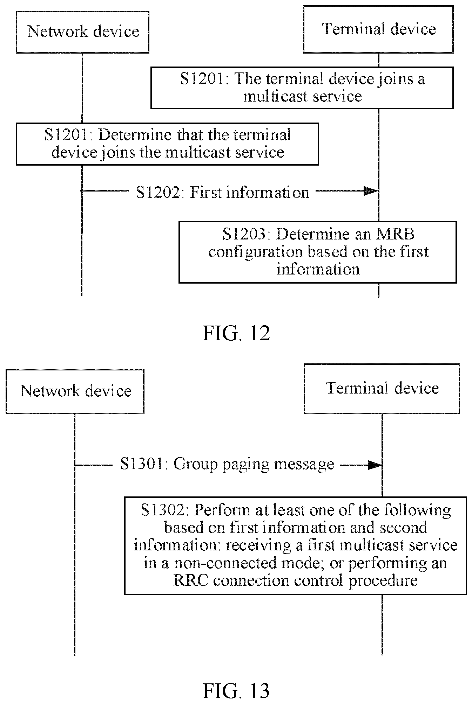

FIG. 12 is a schematic flowchart of a communication method according to this application. The method may include the following steps.

S1201: A terminal device joins a multicast service in a connected mode. Correspondingly, a network device determines that the terminal device joins the multicast service.

It should be understood that, that the terminal device joins the multicast service may be understood as that when the network device sends the multicast service, the terminal device may receive data of the multicast service.

It should be further understood that, even if the terminal device joins a multicast service in the connected mode, if the network device does not send data of the multicast service at all, the terminal device will not receive the data of the multicast service.

Therefore, optionally, the network device may send the multicast service to the terminal device in the connected mode. Correspondingly, the terminal device in the connected mode receives the multicast service from the network device.

S1202: The network device sends first information to the terminal device in the connected mode, where the first information indicates an MRB configuration, and the MRB configuration is an MRB configuration used by the terminal device to receive the multicast service in a non-connected mode. Correspondingly, the terminal device in the connected mode receives the first information from the network device.

Optionally, if the network device determines that the terminal device joins a plurality of multicast services, the first information may indicate a part or all of MRB configurations of some or all of the plurality of multicast services. For example, in S1201, if the network device determines that the terminal device joins a multicast service #1, a multicast service #2, and a multicast service #3, a first indication in S1202 may indicate the terminal device to receive, in the non-connected mode, a part or all of MRB configurations of multicast services in a multicast service set #1. The multicast service set #1 includes at least one of the multicast service #1, the multicast service #2, and the multicast service #3.

For ease of description, an example in which in S1202, the first information indicates the part or all of the MRB configurations required when the terminal device receives, in the non-connected mode, the service in the multicast service set #1 is used for description below.

It should be understood that, the terminal device receiving the first information is a terminal device that subsequently may need to be released to the non-connected mode to receive the multicast service and that is determined by the network device. Therefore, optionally, before S1202, the method further includes: The network device determines at least one terminal device that needs to be released to the non-connected mode to receive the multicast service. For example, the network device may determine, in the following manner, a terminal device that needs to release an RRC connection.

Manner 1: The network device determines, based on a type of the multicast service received by the terminal device, the terminal device that needs to release the RRC connection. For example, the network device determines that a terminal device that receives only the multicast service is the terminal device that needs to release the RRC connection, or the network device determines that a terminal device that receives only the multicast service and for which the network device provides the multicast service when the terminal device is in the non-connected mode is the terminal device that needs to release the RRC connection.

### Manner 2

The network device determines, based on priority information of the terminal device from a core network, the terminal device that needs to release the RRC connection. It can be learned from the foregoing description that, the core network needs to manage the terminal device that joins the multicast service. Therefore, the core network may indicate the priority information of the terminal device to the network device.

In a possible implementation, the priority information of the terminal device may be indicated by using a value. Optionally, a larger value represents a higher priority of the terminal device (namely, an important terminal device), or a smaller value represents a higher priority of the terminal device. Optionally, a priority of the terminal device may be one of positive integers such as 1, 2, and 3. Optionally, the priority information may indicate importance of the terminal device. For example, when the priority is 1, it represents that the terminal device is the important terminal device; or when the priority is less than or equal to 2, it represents that the terminal device is the important terminal device; or when the priority is greater than or equal to 2, it represents that the terminal device is the important terminal device. In this implementation, the network device may determine, based on the priority information of the terminal device, that the important terminal device stays in the connected mode, and determine that some unimportant terminal devices are terminal devices that need to release the RRC connections.

In another possible implementation, the priority information of the terminal device may be indicated through a field or an information element of an enumerated value {important, unimportant}, an enumerated value {preferred, non-preferred}, or an enumerated value {yes, no}. For example, a priority of the terminal device is indicated through an enumerated value {important}, representing that the terminal device is an important terminal device, and the network device keeps the terminal device in the connected mode; or a priority of the terminal device is indicated through an enumerated value {unimportant}, representing that the terminal device is an unimportant terminal device. The network device determines that the terminal device is a terminal device that can be released.

In still another possible implementation, the priority information of the terminal device may be indicated through an enumerated value {important}, {preferred}, or {yes}. When the enumerated value exists, it represents that a corresponding terminal device is an important terminal device. When the enumerated value does not exist, it represents that a corresponding terminal device is an unimportant terminal device.

It can be learned that, in the foregoing implementation, the terminal device that needs to release the RRC connection is determined based on different requirements. For example, a terminal device with a low priority performs RRC release, and a terminal device with a high priority keeps in the RRC connected mode, to more accurately select the terminal device that needs to be released to the non-connected mode to receive the multicast service.

S1203: The terminal device determines the MRB configuration based on the first information. The MRB configuration is the part or all of the MRB configurations required by the terminal device to receive, in the non-connected mode, the service in the multicast service set #1.

For example, there may be the following several manners about how the first information indicates the MRB configuration and how the terminal device determines the MRB configuration based on different indication manners of the first information.

### Manner 1

The first information is used to trigger the terminal device to obtain the MRB configuration. Correspondingly, the terminal device in the connected mode monitors, based on the first information, a PDCCH corresponding to a multicast control channel, and obtains, in the connected mode, the MRB configuration included in the multicast control channel. Alternatively, the terminal device in the connected mode starts, based on the first information, to monitor a PDCCH corresponding to a multicast control channel and obtains a part of the MRB configuration. In a process of obtaining the MRB configuration, the terminal device may enter the non-connected mode, and after entering the non-connected mode, the terminal device continues to obtain a remaining part of the MRB configuration.

It may be understood that, the MRB configuration in Manner 1 is all of the MRB configuration required by the terminal device to receive, in the non-connected mode, the service in the multicast service set #1.

For example, the multicast control channel may be a multicast control channel of multicast, or may be a multicast control channel of multiplexing broadcast. This is not specifically limited in this application. It should be understood that, in this embodiment of this application, an MCCH represents the multicast control channel, but the MCCH should not constitute any limitation on content and a function of the channel. This application does not exclude a possibility of naming the multicast control channel by using another name. For example, the multicast control channel of the multicast may continue to use a name MCCH of the multicast control channel of the broadcast, or may use another name.

For example, the first information may be a MAC control element (control element, CE) or downlink control information (downlink control information, DCI). For example, when the first information is the MAC CE, the MAC CE may be scrambled by using a C-RNTI of the terminal device or by using a G-RNTI of the service in the multicast service set #1 monitored by the terminal device in the connected mode.

In an implementation, after determining the MRB configuration, the terminal device may set up, in the connected mode based on the MRB configuration, a new MRB used by the terminal device to receive the service in the multicast service set #1 in the non-connected mode, and after entering the non-connected mode, the terminal device releases or suspends an MRB previously used by the terminal device to receive the service in the multicast service set #1 in the connected mode, and reserves the newly set up MRB used by the terminal device to receive the service in the multicast service set #1 in the non-connected mode.

In another implementation, after determining the MRB configuration and after entering the non-connected mode, the terminal device may set up, based on the MRB configuration, a new MRB used by the terminal device to receive the service in the multicast service set #1 in the non-connected mode, and releases or suspends an MRB previously used by the terminal device to receive the service in the multicast service set #1 in the connected mode.

It should be understood that, the MRB (referred to as a "non-connected-mode MRB" for short in Manner 1) used by the terminal device to receive the service in the multicast service set #1 in the non-connected mode is set up based on the MRB configuration (referred to as an "MRB configuration in a non-connected mode" in Manner 1) used by the terminal device to receive the service in the multicast service set #1 in the non-connected mode. The MRB (referred to as a "connected-mode MRB" for short in Manner 1) used by the terminal device to receive the service in the multicast service set #1 in the connected mode is set up based on the MRB configuration (referred to as an "MRB configuration in a connected mode" in Manner 1) used by the terminal device to receive the service in the multicast service set #1 in the connected mode.

It can be learned that, in the foregoing manner, the network device triggers, through the first information, the terminal device to obtain, in the connected mode, the MRB configuration in the non-connected mode in advance. In this way, the terminal device in the RRC connected mode may set up the MRB in the non-connected mode in advance based on the MRB configuration in the non-connected mode, so that when the terminal device is released from the connected mode to the non-connected mode, the terminal device may receive the multicast service by using the MRB in the non-connected mode that is set up, to ensure continuity of receiving the multicast service by the terminal device. It may be understood that, compared with a case in which after entering the non-connected mode, the terminal device starts to obtain the MRB configuration in the non-connected mode, in this embodiment, after entering the non-connected mode, the terminal device may set up the MRB in the non-connected mode by using the MRB configuration in the non-connected mode obtained in advance, or obtain a part of the MRB configuration in advance before entering the non-connected mode. In this way, an interruption time period of receiving the multicast service by the terminal device can be reduced, to improve continuity of the multicast service.

### Manner 2

The first information indicates whether the terminal device in the non-connected mode receives the service in the multicast service set #1 by using the MRB configuration used by the terminal device to receive the service in the multicast service set #1 in the connected mode.

Optionally, the first information indicates each MRB corresponding to each service in the multicast service set #1. That is, an indication granularity of the first information is each MRB. For example, the first information indicates that an MRB #11 of the service #1 in the multicast service set #1 can continue to be used, and indicates that an MRB #12 of the service #1 in the multicast service set #1 cannot continue to be used. In addition, the first information indicates that an MRB #21 of the service #2 in the multicast service set #1 cannot continue to be used, and indicates that an MRB #22 of the service #2 in the multicast service set #1 can continue to be used. Details are not described herein again.

Optionally, the first information indicates all MRBs of each service in the multicast service set #1. That is, an indication granularity of the first information is each service. For example, the first information indicates that all MRBs of the service #1 in the multicast service set #1 can continue to be used, and indicates that all MRBs of the service #2 in the multicast service set #1 cannot continue to be used. Details are not described herein again.

Optionally, the first information indicates all MRBs of all the services in the multicast service set #1. That is, an indication granularity of the first information is each UE. For example, the first information indicates that all the MRBs of all the services in the multicast service set #1 can continue to be used. For another example, the first information indicates that all the MRBs of all the services in the multicast service set #1 cannot continue to be used.
(1) If the first information indicates that the MRB configuration used by the terminal device to receive the service in the multicast service set #1 in the connected mode can continue to be used, the terminal device continues to use all or a part of the MRB configurations used by the terminal device to receive the service #1 in the connected mode.

It should be understood that, regardless of whether the indication granularity of the first information is each MRB, each service, or each UE, further processing needs to be performed on a type of each MRB. For ease of understanding, an example in which the multicast service set #1 includes the service #1, and an MRB corresponding to the service #1 includes an MRB #1 is used below for further detailed description. For example, in the case (1), the terminal device may perform at least one of the following operations.
① If the MRB #1 used by the terminal device to receive the service #1 in the connected mode is a PTP only MRB, the PTP only MRB is suspended. In this case, the terminal device may monitor, in the connected mode or the non-connected mode, the PDCCH corresponding to the MCCH, to obtain (determine) the MRB configuration used by the terminal device to receive the service #1 in the non-connected mode. The terminal device sets up, based on the MRB configuration, a new MRB to receive the service #1 in the non-connected mode.
   It should be understood that, the MRB configuration used to receive the service #1 when the terminal device in the non-connected mode is carried on the MCCH.
   It should be further understood that, when the indication granularity of the first information is each MRB, if the MRB #1 used to receive the service #1 in the connected mode is the PTP only MRB, the first information does not indicate that the MRB #1 can continue to be used.
② If the MRB #1 used to receive the service #1 when the terminal device is in the connected mode is a PTM only MRB, the PTM only MRB is not suspended, and the terminal device continues to receive the service #1 in the non-connected mode by using the PTM only MRB.
③ If the MRB #1 used to receive the service #1 when the terminal device is in the connected mode is a split MRB, the terminal device continues to receive the service #1 in the non-connected mode by using the PTM MRB in the split MRB. Optionally, the PTP MRB in the split MRB is suspended.

(2) If the first information indicates not to use the MRB configuration used by the terminal device to receive the service in the multicast service set #1 in the connected mode, the terminal device suspends all MRBs used by the terminal device to receive the service in the multicast service set #1 in the connected mode. The terminal device obtains, through monitoring, the MRB configuration used to receive the service in the multicast service set #1, and sets up a new MRB based on the obtained MRB configuration to receive the service in the multicast service set #1 in the non-connected mode.

(3) If the first information does not exist, that is, the network device does not indicate whether the MRB configuration in the connected mode can continue to be used, the terminal device determines whether the MRB in the connected mode can be used. If the MRB in the connected mode can be used, the terminal device receives the service in the multicast service set #1 in the non-connected mode. If the MRB in the connected mode cannot be used (for example, the MRB in the connected mode is a PTP only MRB), the terminal device suspends the MRB that cannot be used, and sets up a new MRB to receive, in the non-connected mode, the service in the multicast service set #1.

For ease of understanding, an example in which the multicast service set #1 includes the service #1, and an MRB of the service #1 includes the MRB #1 is used below for further detailed description. For example, in the case (3), the terminal device may perform the following operations.
(1) If the MRB used by the terminal device to receive the service #1 in the connected mode is a PTP only MRB, the PTP only MRB is suspended. In this case, the terminal device may monitor, in the connected mode, the PDCCH corresponding to the MCCH, to obtain the MRB configuration that is included in the MCCH and that is used by the terminal device to receive the service #1 in the non-connected mode. The terminal device sets up, based on the MRB configuration, a new MRB to receive the service #1 in the non-connected mode.
② If the MRB used by the terminal device to receive the service #1 in the connected mode is a PTM only MRB, the terminal device may obtain, through monitoring in the connected mode or the non-connected mode, the MRB configuration used by the terminal device to receive the service #1 in the non-connected mode. The terminal device checks whether the MRB used by the terminal device to receive the service #1 in the connected mode needs to be updated. If the MRB used by the terminal device to receive the service #1 in the connected mode needs to be updated, the terminal device sets up, based on the MRB configuration obtained through monitoring, a new MRB to receive the service #1 in the non-connected mode. If the MRB used by the terminal device to receive the service #1 in the connected mode does not need to be updated, the terminal device continues to receive the service #1 in the non-connected mode by using the PTM only MRB.
③ If the MRB used by the terminal device to receive the service #1 in the connected mode is a split MRB, similarly, the terminal device may obtain, through monitoring, the MRB configuration used to receive the service #1 in the connected mode, and check whether a PTM MRB in the split MRB needs to be updated. If the PTM MRB in the split MRB needs to be updated, the terminal device sets up a new PTM MRB based on the MRB configuration obtained through monitoring. The new PTM MRB is used to receive the service #1 in the non-connected mode. If the PTM MRB in the split MRB does not need to be updated, the terminal device continues to receive the service #1 in the non-connected mode by using the PTM MRB in the split MRB, and optionally, suspends the PTP MRB in the split MRB.

It can be learned that, in the foregoing manner, the terminal device may determine, in the connected mode in advance through the first information, whether the MRB configuration in the non-connected mode is the same as the MRB configuration in the connected mode. If the MRB configuration in the non-connected mode is the same as the MRB configuration in the connected mode, the terminal device does not need to set up a new MRB, to reduce energy consumption of the terminal device and the network device, and the terminal device can earlier start to receive the service in the non-connected mode. If the MRB configuration in the non-connected mode is different from the MRB configuration in the connected mode, the terminal device can obtain the MRB configuration in the non-connected mode in advance. In this way, if the terminal device sets up, in the connected mode, a new MRB in the non-connected mode based on the MRB configuration in the non-connected mode, continuity of receiving the multicast service when the terminal device is released from the connected mode to the non-connected mode can be ensured. It may be understood that, compared with a case in which after entering the non-connected mode, the terminal device starts to obtain the MRB configuration in the non-connected mode, in this embodiment, after entering the non-connected mode, the terminal device sets up the new MRB in the non-connected mode based on the MRB configuration in the non-connected mode. In this way, an interruption time period of receiving the multicast service by the terminal device can be reduced, to improve continuity of the multicast service.

### Manner 3

Manner 3 may be a combination of Manner 1 and Manner 2. The terminal device receives the first information in Manner 1 and the first information in Manner 2, and the terminal device determines, based on the first information in Manner 1 and the first information in Manner 2, whether to continue to use or re-obtain all or a part of the MRB configurations used by the terminal device to receive the service #1 in the connected mode. For example, the terminal device determines, based on the first information in Manner 2, whether the MRB configuration in the non-connected mode is the same as the MRB configuration in the connected mode. If the MRB configuration in the non-connected mode is the same as the MRB configuration in the connected mode, after being released to the non-connected mode, the terminal device continues to receive the service in the multicast service set #1 by using the MRB in the connected mode. If the MRB configuration in the non-connected mode is different (completely different or partially different) from the MRB configuration in the connected mode, the terminal device may set up, in the connected mode, a new non-connected-mode MRB based on the MRB configuration in the non-connected mode that is indicated by the first information in Manner 1. In addition, after entering the non-connected mode, the terminal device receives the service in the multicast service set #1 based on the non-connected-mode MRB that is newly set up. Alternatively, the terminal device may set up a new MRB in the connected mode. The MRB corresponds to a difference between the MRB configuration in the non-connected mode and the MRB configuration in the connected mode, an MRB corresponding to the same MRB configuration in the MRB configuration in the non-connected mode and the MRB configuration in the non-connected mode is reserved and remains unchanged. After entering the non-connected mode, the terminal device receives the service in the multicast service set #1 based on the MRB that is newly set up and the MRB that is reserved.

It can be learnt that, in the foregoing manner, compared with a case in which the terminal device starts to obtain the MRB configuration in the non-connected mode after entering the non-connected mode, in this embodiment, an interruption time period of receiving the multicast service by the terminal device can be reduced, to improve continuity of the multicast service.

### Manner 4

The first information indicates an MRB that needs to be reserved or needs to be suspended in MRBs used by the terminal device to receive the service in the multicast service set #1 in the connected mode.

Optionally, the first information indicates an MBS session ID that needs to be reserved or needs to be suspended in an MBS session ID of the multicast service received by the terminal device in the connected mode. It can be learned from the foregoing that, one MBS session may correspond to one or more MRBs. Therefore, that one MBS session needs to be reserved or needs to be suspended implicitly indicates that the plurality of MRBs corresponding to the MBS session need to be reserved or needs to be suspended.

Optionally, the first information indicates a G-RNTI that needs to be reserved or needs to be suspended in a G-RNTI of the multicast service received by the terminal device in the connected mode. It can be learned from the foregoing that, one MRB corresponds to only one G-RNTI, but one G-RNTI may correspond to a plurality of MRBs. Therefore, that one G-RNTI needs to be reserved or needs to be suspended implicitly indicates that one or more MRBs corresponding to the G-RNTI need to be reserved or needs to be suspended.

Optionally, the method further includes: The terminal device receives, in the connected mode, second information from the network device, where the second information indicates the terminal device to receive, in the non-connected mode, the service in the multicast service set #1; the terminal device enters the non-connected mode based on an RRC release (release) message; and the terminal device continues to receive, in the non-connected mode, the service in the multicast service set #1 based on the second information by using the MRB (or the MRB configuration) determined in S1203.

Optionally, the first information may be sent to the terminal device before the second information, or the first information and the second information may be simultaneously sent to the terminal device.

Optionally, the second information may be carried in the RRC release message sent by the network device to the terminal device, the RRC release message indicates the terminal device to enter the non-connected mode, and the second information indicates that a reason why the terminal device releases the RRC connection is that the terminal device receives the multicast service in the non-connected mode.

**In** the foregoing embodiment, the MRB configuration used to receive the multicast service when the terminal device is released to the non-connected mode is specified. Therefore, before being released to the non-connected mode, the terminal device may determine the MRB configuration used to receive the multicast service in the non-connected mode, so that continuity of receiving the multicast service in the process in which the UE is released to the non-connected mode is facilitated.

It may be understood that, when network congestion is relieved (completely relieved or relieved to some extent), a multicast service is activated, or a multicast service needs to be released, the network device may further page, through a paging message, the terminal device that is released to the non-connected mode to receive the multicast service to enter the connected mode. After receiving the paging message, the terminal device performs access control, for example, performs a UAC process. If the terminal device is allowed to perform access, the terminal device initiates an RRC connection control procedure to enter the RRC connected mode. However, for the terminal device that receives the multicast service in the RRC non-connected mode, after receiving the paging message, because an AC corresponding to a paging service is equal to 0, a plurality of terminal devices paged by the paging message may directly perform the RRC connection control procedure. In this case, a large quantity of terminal devices may simultaneously access a network, causing network congestion.

**In** view of this, this application provides another method, to effectively resolve the foregoing technical problem. The following describes in detail the method provided in this application.

FIG. 13 is a schematic flowchart of another communication method according to this application. The method includes the following steps.

S1301: A network device sends a group paging message to a terminal device. Correspondingly, the terminal device receives the group paging message from the network device.

Optionally, the group paging message includes first information, and the first information is used to page a group of terminal devices to receive a first multicast service, where the group of terminal devices include the terminal device that receives the group paging message.

It should be understood that, the group of terminal devices paged through the first information are terminal devices that join the first multicast service and that are in a non-connected mode.

S1302: The terminal device performs, based on the first information and second information, at least one of the following: receiving the first multicast service in the non-connected mode; or performing an RRC connection control procedure. The second information indicates whether the network device provides the first multicast service for the terminal device in the non-connected mode.

It should be understood that, if the network device provides the first multicast service for the device in the non-connected mode, only joining the first multicast service in a connected mode, the terminal device in the non-connected mode can receive the first multicast service. Therefore, the second information may also be understood as indicating whether the network device provides the first multicast service for the group of paged terminal devices in the non-connected mode.

Optionally, the second information may be carried in the group paging message, or the second information may be carried on a multicast control channel, or the second information may be carried in another message. This is not limited in this application. For example, both the first information and the second information are carried in the group paging message, the first information may be a TMGI of the first multicast service, and the second information may be indication information of one bit. For example, 0 represents that the network device provides the first multicast service for the terminal device in the non-connected mode, 1 represents that the network device does not provide the first multicast service for the terminal device in the non-connected mode, and vice versa. For another example, the first information is carried in the group paging message, and the second information is carried on the multicast control channel.

For example, the multicast control channel may be a multicast control channel of multicast, or may be a multicast control channel of multiplexing broadcast. This is not specifically limited in this application. It should be understood that, in this embodiment of this application, an MCCH represents the multicast control channel, but the MCCH should not constitute any limitation on content and a function of the channel. This application does not exclude a possibility of naming the multicast control channel by using another name. For example, the multicast control channel of the multicast may continue to use a name MCCH of the multicast control channel of the broadcast, or may use another name.

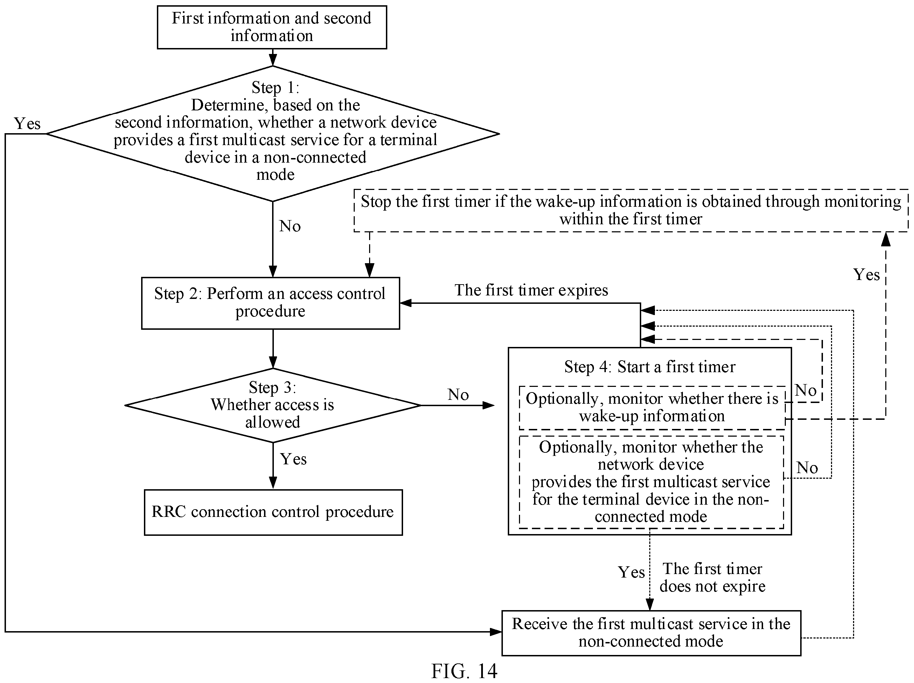

It should be understood that, it can be learned from the foregoing description that before performing the RRC connection control procedure, the terminal device usually first needs to perform an access control procedure. The following provides several possible implementations of S1302 with reference to FIG. 14, FIG. 15, and FIG. 16. For example, the following uses an example in which both the first information and the second information are carried in the group paging message for description.

FIG. 14 is a flowchart of a first implementation. In this implementation, the terminal device determines, based on the second information, to receive the first multicast service in the non-connected mode; or performs the RRC connection control procedure. This implementation may specifically include the following steps.

Step 1: The terminal device determines, based on the second information, whether the network device provides the first multicast service for the terminal device in the non-connected mode.

Optionally, if the second information indicates that the network device provides the first multicast service for the terminal device in the non-connected mode, the terminal device neither performs the access control procedure nor performs the subsequent RRC connection control procedure, and the terminal device receives the first multicast service in the non-connected mode. It should be understood that, when the second information indicates that the network device provides the first multicast service for the terminal device in the non-connected mode, the terminal device may obtain configuration information of the first multicast service by monitoring a PDCCH corresponding to an MCCH, and the terminal device receives the first multicast service based on the obtained configuration information of the first multicast service.

Optionally, if the second information indicates that the network device does not provide the first multicast service that is used to be received by the terminal device in the non-connected mode, step 2 is performed.

Optionally, if the terminal device has a high priority or is an important or specific terminal device indicated by a core network, the terminal device may ignore the second information, skip the access control procedure, and directly perform the RRC connection control procedure; or the terminal device may ignore the second information, and perform the access control procedure, the terminal device is allowed to perform access, and the terminal device continues to perform the RRC connection control procedure.

Step 2: The terminal device performs the access control procedure. Then, the terminal device performs step 3.

For example, the access control procedure may be specifically UAC.

For example, the access control procedure may be further implemented in the following two manners. Manner 1: The group paging message includes a set of barring parameters (which may be understood as a function, and a meaning or a value range is equivalent to the barring parameter in step 4 in the concept explanation 10). In this way, in comparison to the UAC procedure, the terminal device does not need to determine an AC, and may directly determine whether the terminal device is allowed to perform access based on the set of barring parameters provided in the group paging message (that is, perform step 3). Manner 2: The group paging message includes an index corresponding to a set of barring parameters. In this way, the terminal device does not need to determine an AC either, may directly determine a corresponding set of barring parameters based on the index (which may be understood as a function, and a meaning or a value range is equivalent to the barring parameter in step 4 in the concept explanation 10), and then, determine whether the terminal device is allowed to perform access (that is, perform step 3).

Step 3: The terminal device determines whether the terminal device is allowed to perform access.

Optionally, if the terminal device is allowed to perform access, the terminal device performs the RRC connection control procedure.

Optionally, if the terminal device is barred from accessing, the terminal device performs step 4.

For example, when the access control procedure is the UAC, in a step determining whether access is allowed in the UAC, the terminal device determines that an AC corresponding to a group paging service may be the same as an AC of an existing paging service, that is, the AC is 0, or an AC of a paging service may be enhanced so that the AC is not equal to 0. If the AC is equal to 0, the terminal device is allowed to perform access, and the terminal device performs the RRC connection control procedure. If the AC is not equal to 0, the terminal device may be allowed to perform access, or may be barred from accessing.

For example, when the access control procedure is the UAC, and the AC is not equal to 0, but the network device expects that all terminal devices can directly access, that is, no terminal device is barred from accessing, a barring parameter corresponding to an AC in a UAC parameter may be deleted from a SIB. In this way, the terminal device directly accesses if the terminal device does not find the barring parameter corresponding to the AC, so that all the terminal devices can directly access. Alternatively, a proportion of 100% is introduced to a value of a barring factor of the AC of the group paging service, so that all the terminal devices can directly access. This method is improved based on a fact that a maximum value of the barring factor corresponding to the AC in the existing UAC parameter is 95%, but not 100%.

For example, when the access control procedure is implemented in Manner 1 or Manner 2 in step 2, and the network device expects that all the terminal devices can directly access, the network device may include no barring parameter in the paging message. In this way, the terminal device directly accesses if the terminal device does not find the barring parameter, so that all the terminal devices can directly access.

For example, if the network device expects that all the terminal devices can directly perform access, the network device may further directly indicate that a group of paged terminal devices are allowed to perform access.

Step 4: The terminal device determines first duration based on barring time in the barring parameter, and then starts a first timer. Running time of the first timer is the first duration.

The terminal device is barred from re-initiating the access control procedure before the first timer expires. After the first timer expires, the terminal device performs step 2, that is, performs the access control procedure again.

Optionally, the terminal device may continue to monitor the PDCCH of the MCCH within the running time of the first timer, to detect whether the network device provides the first multicast service for the terminal device in the non-connected mode. It should be understood that, a reason why the terminal device continues to perform monitoring when the terminal device is barred from accessing is that the network device may not provide the first multicast service for the terminal device in the non-connected mode when sending the second information, but provides the first multicast service for the terminal device in the non-connected mode after sending the second information. For example, when the network device pages, no terminal device accesses. In this case, the network device considers that no terminal device has accessed, and therefore does not provide the configuration information of the first multicast service in the non-connected mode. After a terminal device successfully accesses, to reduce simultaneous access of a large quantity of terminal devices in a same time period, the network device may start to provide the configuration information of the first multicast service in the non-connected mode. Therefore, the terminal device that is barred from accessing may obtain, through monitoring, the configuration information of the first multicast service within the running time of the first timer when the terminal device is barred from accessing.

Optionally, monitoring the PDCCH of the MCCH within the running time of the first timer, to detect whether the network device provides the first multicast service for the terminal device in the non-connected mode may also be understood as another manner in which the terminal device obtains the second information. Optionally, whether the terminal device needs to perform a procedure of monitoring after the terminal device is barred from accessing may be controlled through first indication information. For example, the first indication information may indicate whether a current cell supports a multicast service in the non-connected mode, or the first indication information may indicate whether a current cell has a multicast service in the non-connected mode, or the first indication information may indicate whether a current cell provides sending in the non-connected mode for a service. For example, if the first indication information indicates that the current cell does not support the multicast service in the non-connected mode, the terminal device does not need to perform the foregoing procedure. It should be understood that, the current cell is a cell in which the terminal device receives the group paging message, and the current cell is a cell served by the network device.

Optionally, the first indication information may be included in a SIB message, or the first indication information is carried in dedicated signaling when the terminal device is in the connected mode.

In this case, the terminal device may have the following several specific implementations depending on whether the configuration information of the first multicast service is obtained through monitoring within the running time of the first timer. These implementations are also applicable to another implementation procedure provided in S1302 of this application.
① If the configuration information of the first multicast service is obtained through monitoring within the running time of the first timer, the terminal device receives the first multicast service in the non-connected mode, and stops attempting to access the network device. That the terminal device stops attempting to access the network device may also be understood as that the terminal device directly exits the access control procedure, or the terminal device stops initiating the access control procedure after the first timer expires, or the terminal device stops the first timer and stops initiating the access control procedure.
   It should be noted that, currently, when a timer within which the terminal device is barred from accessing expires or stops, it is considered that a case in which the terminal device is barred from accessing is canceled, that is, the terminal device can initiate a next access control procedure.
② If the configuration information of the first multicast service is obtained through monitoring within the running time of the first timer, the terminal device in the non-connected mode can receive the first multicast service, but does not stop the first timer, and re-initiates the access control procedure after the first timer expires.
③ If the configuration information of the first multicast service is not obtained through monitoring within the running time of the first timer, the terminal device re-initiates the access control procedure after the first timer expires.

Optionally, the terminal device may further monitor, within the running time of the first timer, whether the MCCH includes wake-up information that indicates to wake up the terminal device, where the wake-up information is used to enable the terminal device to enter the connected mode from the non-connected mode. If the wake-up information is obtained through monitoring, the terminal device stops the first timer, and performs step 2. If the wake-up information is not obtained through monitoring, after the first timer expires, the terminal device performs step 2. In a possible scenario, when the terminal device waits for performing re-access within the first timer, current congestion of the network device is relieved, and some terminals barred from accessing may attempt to perform accessing again. Therefore, the network device may include the wake-up information in the MCCH. In this way, the terminal device may stop the first timer after receiving the wake-up information, and attempt to perform accessing again. For example, the wake-up information may be explicitly indicated through the MCCH, or the wake-up information may be implicitly indicated through a TMGI of the first multicast service that does not exist in a TMGI list of the MCCH.

The first implementation shown in FIG. 14 may be used in different scenarios, such as multicast service activation, multicast service release, complete relief of network congestion, or partial relief of network congestion. For example, possible execution manners of using the first implementation in different scenarios are as follows.

### (1) Multicast service activation

It should be understood that, a reason why the paged terminal device is released to the non-connected mode in S1301 may be that the terminal device receives the multicast service in the non-connected mode, or may be RRC deactivation.

Optionally, in this scenario, if the second information indicates that the network device provides the multicast service for the terminal device in the non-connected mode, in the group of paged terminal devices, regardless of a reason why the terminal device is released to the non-connected mode is that the terminal device needs to receive the multicast service in the non-connected mode or is the RRC deactivation, the terminal device can stay in the non-connected mode based on the indication of the second information to receive the multicast service.

Optionally, in this scenario, if the second information indicates that the network device does not provide the multicast service for the terminal device in the non-connected mode, the terminal device performs the access control procedure. In an implementation, to enable all paged terminal devices to access, a barring parameter of access control may be set to allow all the paged terminal devices to access. For some possible a specific setting manner, refer to descriptions in step 3 in the embodiment in FIG. 14. Details are not described herein again.

Optionally, in this scenario, it may also be stipulated that if the reason why the terminal device is released to the non-connected mode is the RRC deactivation, the terminal device ignores the second information and directly performs the RRC connection control procedure, or the terminal device ignores the second information and performs the access control procedure.

### (2) Multicast service release

In a multicast service release scenario, normally, when the core network triggers the multicast service release, the network device does not provide the multicast service for the terminal device in the non-connected mode. In this case, the paged terminal device should return to the connected mode as much as possible to receive the multicast service. Therefore, the network device may indicate, through the second information, that the network device does not provide the multicast service for the terminal device in the non-connected mode. In this case, the terminal device performs access control. In an implementation, to enable all paged terminal devices to access, a barring parameter of access control may be set to allow all the paged terminal devices to access. For a specific setting manner, refer to descriptions in step 3 in the embodiment in FIG. 14. Details are not described herein again.

### (3) Congestion relief (complete)

In a scenario in which congestion in the network device is completely relieved, the paged terminal device should return to the connected mode as much as possible to receive the multicast service. Therefore, the network device may indicate, through the second information, that the network device does not provide the multicast service for the terminal device in the non-connected mode. In this way, the terminal device performs access control. For example, to enable all paged terminal devices to access, for a specific setting manner, refer to descriptions in step 3 in the embodiment in FIG. 14. Details are not described herein again.

### (4) Congestion relief (partial)

When the network device has some resources that can be used to provide a multicast service in the connected mode, some terminal devices in the paged terminal devices should be controlled to access the network device. It should be understood that, in this case, the network device further provides the multicast service for the paged terminal device in the non-connected mode, so that the terminal device receives the multicast service when the terminal device is barred from accessing. It should be further understood that, after the paged terminal device receives the group paging message, if the paged terminal device determines that the network device provides the multicast service for the terminal device in the non-connected mode, the paged terminal device continues to stay in the non-connected mode. Therefore, in this scenario, although the network device may further/can further provide the multicast service for the paged terminal device in the non-connected mode, the network device should also indicate, through the second information, that the network device does not provide the multicast service for the terminal device in the non-connected mode. In addition, the terminal device also supports checking, within the duration of the timer within which the terminal device is barred from accessing, whether the MCCH has the configuration information of the multicast service. In this way, the terminal device in the non-connected mode performs the access control procedure. In this way, some terminal devices are allowed to perform access, and some terminal devices are barred from accessing. The terminal devices in the non-connected mode that are barred from accessing may obtain the MCCH when being barred from accessing, to receive the multicast service.

Optionally, in this scenario, in a process of performing the access control procedure, the terminal device receives the multicast service without being interrupted, and continuously monitors the PDCCH corresponding to the MCCH.

Optionally, the terminal devices in the non-connected mode that cannot perform access may keep staying in the non-connected mode to receive the multicast service, or may perform access control again after the duration of the timer within which the terminal devices are barred from accessing expires.

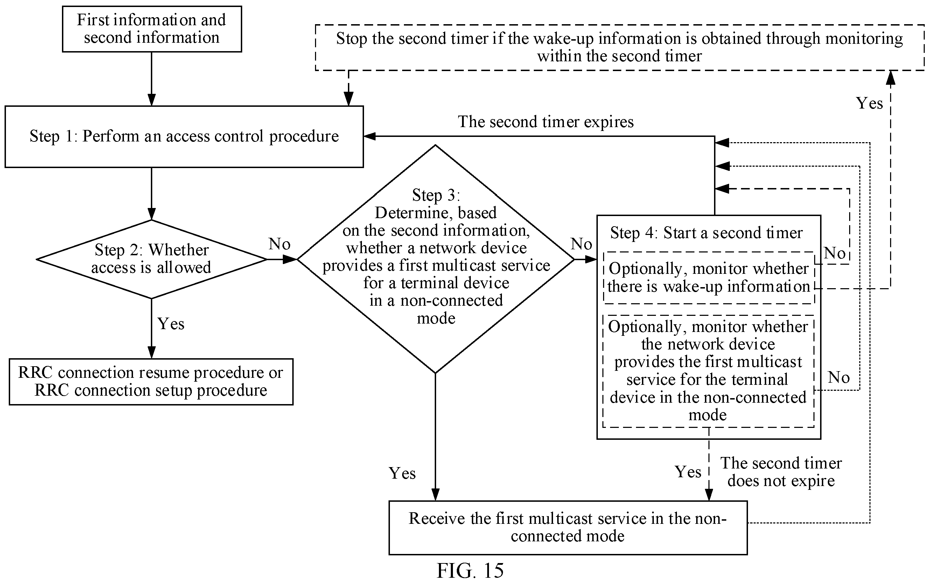

FIG. 15 is a flowchart of a second implementation. A difference from the procedure in FIG. 14 lies in that, in this implementation, the terminal device first performs the access control procedure after receiving the group paging message, and determines a subsequent step based on the second information after the terminal device is not allowed to perform access. This implementation may include the following steps.

Step 1: The terminal device performs the access control procedure. Then, the terminal device performs step 2.

For a specific manner in which the access control procedure may be implemented, refer to descriptions in step 2 in FIG. 14. Details are not described herein again.

Optionally, if the terminal device has a high priority or is an important or specific terminal device indicated by a core network, the terminal device may skip the access control procedure, and directly perform the RRC connection control procedure; or the terminal device may perform the access control procedure, the terminal device is allowed to perform access, and the terminal device continues to perform the RRC connection control procedure.

Step 2: The terminal device determines whether the terminal device is allowed to perform access.

Optionally, if the terminal device is allowed to perform access, the terminal device performs an RRC connection resume procedure or an RRC connection setup procedure.

Optionally, if the terminal device is barred from accessing, after being barred from accessing, the terminal device needs to determine second duration based on barring time of a barring parameter of access control, where the second duration is running time of a second timer.

Optionally, in this implementation, the terminal device needs to first perform step 3 before determining whether to start the second timer. For example, when the access control procedure is UAC, in a step determining whether access is allowed in the UAC, the terminal device determines that an AC corresponding to a group paging service may be the same as an AC of an existing paging service, that is, the AC is 0, or an AC of a paging service may be enhanced so that the AC is not equal to 0. If the AC is equal to 0, the terminal device is allowed to perform access, and the terminal device performs the RRC connection control procedure. If the AC is not equal to 0, the terminal device may be allowed to perform access, or may be barred from accessing.

For example, when the access control procedure is the UAC, if the network device wants to control none of terminal devices to be allowed to perform access, the network device may enhance the AC of the group paging service, so that the AC is not equal to 0, and then may set a barring factor of a barring parameter of the AC of the group paging to 0. In this manner, none of the terminal devices is allowed to perform access, and all the terminal devices stay in the non-connected mode to receive the first multicast service.

For example, if the network device wants to control none of the terminal devices to be allowed to perform access, the network device may alternatively directly indicate a group of paged terminal devices to be barred from accessing.

Step 3: The terminal device determines, based on the second information, whether the network device provides the first multicast service for the terminal device in the non-connected mode.

Optionally, if the second information indicates that the network device provides the first multicast service for the terminal device in the non-connected mode, the terminal device does not start the second timer or exits the access control procedure (that is, stops attempting to access the network device), and the terminal device monitors a PDCCH corresponding to an MCCH in the non-connected mode to obtain configuration information of the first multicast service. Then, the terminal device receives the first multicast service in the non-connected mode based on the obtained multicast configuration information of the first multicast service.

Optionally, if the second information indicates that the network device does not provide the first multicast service for the terminal device in the non-connected mode, step 4 is performed.

Step 4: The terminal device starts the second timer. The terminal device is barred from re-initiating the access control procedure before the second timer expires. After the second timer expires, step 1 is performed, and the terminal device re-initiates the access control procedure.

Optionally, the terminal device may monitor, within the running time of the second timer, whether the network device provides the first multicast service for the terminal device in the non-connected mode. Actions that may be performed after the terminal device obtains through monitoring or does not obtain through monitoring the configuration information of the first multicast service within the second timer are shown in FIG. 15. For specific descriptions, refer to descriptions in step 4 in FIG. 14. Details are not described herein again.

Optionally, in this implementation, the terminal device may also directly perform step 4 after step 2. To be specific, regardless of whether the second information indicates that the first multicast service is provided, the terminal device starts the second timer. If the second information indicates that the network device provides the first multicast service for the terminal device, the terminal device in the non-connected mode receives the first multicast service within running duration of the second timer, and performs the access control procedure again after the first timer expires. It should be understood that, in this implementation, a sequence of step 3 should not constitute a limitation on this application. The terminal device may determine, based on the second information at any moment after the terminal device receives the second information, whether the network device provides the first multicast service for the terminal device in the non-connected mode, for example, may determine, based on the second information before step 1, whether the network device provides the first multicast service for the terminal device in the non-connected mode.

For example, for the second implementation corresponding to FIG. 15, possible execution manners in different scenarios are as follows.

### (1) Multicast service activation

It should be understood that, a reason why the paged terminal device is released to the non-connected mode in S1301 may be that the terminal device receives the multicast service in the non-connected mode, or may be deactivation.

Optionally, in this scenario, the access control procedure is first performed. If the terminal device is barred from accessing, and the second information indicates that the network device provides the multicast service for the terminal device in the non-connected mode, in the paged terminal devices, both the terminal device that is released due to a need of receiving the multicast service in the non-connected mode and the terminal device that is released due to deactivation can stay in the non-connected mode based on the indication of the second information to receive the multicast service.

Optionally, in this scenario, the access control procedure is first performed. If the terminal device is barred from accessing, and the second information indicates that the network device does not provide the multicast service for the terminal device in the non-connected mode, the terminal device performs the access control procedure. In an implementation, to enable all paged terminal devices to access, a barring parameter may be set to allow all the paged terminal devices to access. For a specific setting manner, refer to descriptions in step 3 in FIG. 14. Details are not described herein again.

Optionally, in this scenario, it may also be stipulated that if the reason why the terminal device is released to the non-connected mode is the deactivation, the terminal device ignores the second information and directly performs the RRC connection control procedure, or the terminal device ignores the second information and performs the access control procedure.

### (2) Multicast service release

In a multicast service release scenario, it should be ensured that the terminal device can access the network device as much as possible. Normally, when the core network triggers the multicast service release, the network device does not provide the multicast service for the terminal device in the non-connected mode. Therefore, when the multicast service is released, the second information may indicate that the network device does not provide the multicast service for the terminal device in the non-connected mode. In an implementation corresponding to FIG. 15, the terminal device first performs access control, and if access is rejected, performs the access control procedure again based on the indication content of the second information. For example, to enable all terminal devices to access, a barring parameter may be set to allow all the paged terminal devices to access. For a specific setting manner, refer to descriptions in step 3 in FIG. 14. Details are not described herein again.

### (3) Congestion relief (complete)

When congestion in the network device is completely relieved, the terminal device should return to the connected mode as much as possible to receive the multicast service. Therefore, in this scenario, all paged terminal devices may be allowed to perform access during access control. For example, to allow all the paged terminal devices to access, for a specific setting manner, refer to descriptions in step 3 corresponding to FIG. 11. Details are not described herein again.

### (4) Congestion relief (partial)

When the network device has some resources that can be used to provide a multicast service in the connected mode, some terminal devices in the paged terminal devices should be controlled to access the network device. In this scenario, a desired effect can be implemented provided that the network device configures a proper barring parameter of access control for the terminal device. For example, a barring factor in a proper barring parameter is set, to control a proportion of terminal devices that are allowed to perform access.

It should be understood that, in this case, the network device further provides the multicast service for the paged terminal device in the non-connected mode, so that the terminal device receives the multicast service when the terminal device is barred from accessing. In an implementation corresponding to FIG. 15, if the terminal device first performs the access control procedure after receiving the group paging message, some terminal devices are allowed to perform access, and some terminal devices are barred from accessing. Then, the terminal devices in the non-connected mode that are barred from accessing may determine, based on the indication of the second information, to receive the multicast service or perform the RRC connection control procedure in the non-connected mode.

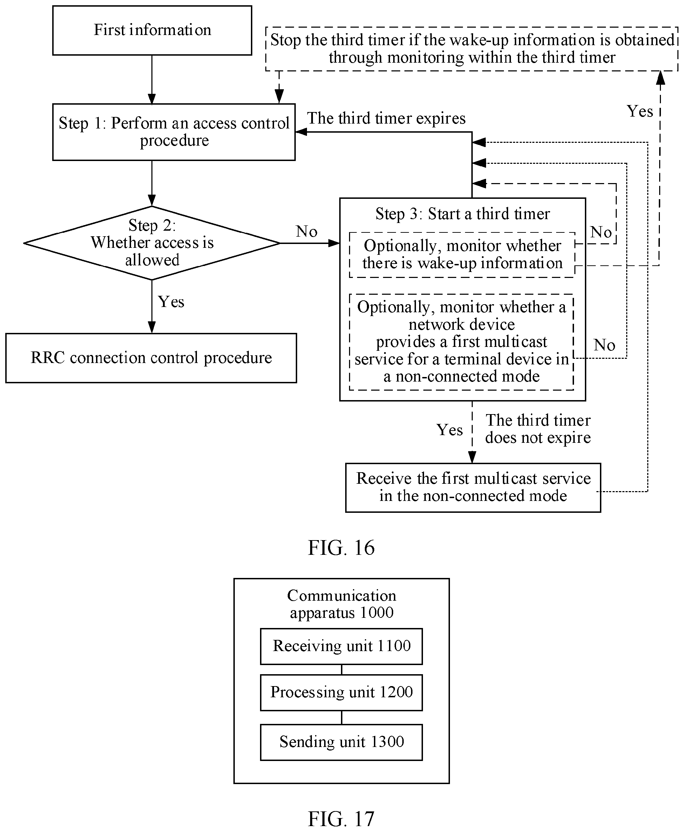

FIG. 16 is a flowchart of a third implementation. In this implementation, the network device does not send the second information, that is, that the group paging message does not carry the second information implicitly indicates that the network device does not provide the first multicast service for the terminal device in the non-connected mode. This implementation may include the following steps.

Step 1: When the group paging message does not indicate whether the first multicast service is provided for the terminal device in the non-connected mode (that is, when the second information does not exist in the group paging message), the terminal device performs the access control procedure. Then, the terminal device performs step 2.

Optionally, if the terminal device has a high priority or is an important or specific terminal device indicated by a core network, the terminal device may ignore the second information, skip the access control procedure, and directly perform the RRC connection control procedure; or the terminal device may ignore the second information, and perform the access control procedure, the terminal device is allowed to perform access, and the terminal device continues to perform the RRC connection control procedure.

Step 2: The terminal device determines whether the terminal device is allowed to perform access.

Optionally, if the terminal device is allowed to perform access, the terminal device performs the RRC connection control procedure.

Optionally, if the terminal device is barred from accessing, the terminal device performs step 3.

For example, when the access control procedure is UAC, if the network device wants to control none of terminal devices to be allowed to perform access, the network device may enhance an AC of a group paging service, so that the AC is not equal to 0, and then may set a barring factor of a barring parameter of the AC of the group paging to 0. In this manner, none of the terminal devices is allowed to perform access, and all the terminal devices stay in the non-connected mode to receive the first multicast service.

For example, when the access control procedure is UAC, if the network device wants to control none of terminal devices to be allowed to perform access, the network device may enhance an AC of a group paging service, so that the AC is not equal to 0, and then may set a barring factor of a barring parameter of the AC of the group paging to 0. In this way, none of the terminal devices is allowed to perform access, and all the terminal devices stay in the non-connected mode to receive the first multicast service.

Similarly, for example, when the access control procedure is implemented in Manner 1 or Manner 2 in step 2 in FIG. 14, if the network device wants to control none of the terminal devices to be allowed to perform access, the network device may set a barring factor in a set of barring parameters included in the paging message to 0. In this way, none of the terminal devices is allowed to perform access, and all the terminal devices stay in the non-connected mode to receive the first multicast service.

For example, if the network device wants to control none of the terminal devices to be allowed to perform access, the network device may alternatively directly indicate the group of paged terminal devices to be barred from accessing.

Step 3: The terminal device determines third duration based on barring time of a barring parameter of access control, and then the terminal device starts a third timer. Running time of the third timer is the third duration.

It should be understood that, the terminal device is barred from re-initiating the access control procedure before the third timer expires. After the third timer expires, the terminal device performs step 1, that is, performs the access control procedure again.

Optionally, the terminal device may monitor, within the third duration, whether the network device provides the first multicast service for the terminal device in the non-connected mode. Actions that may be performed after the terminal device obtains through monitoring or does not obtain through monitoring the configuration information of the first multicast service within the third timer are shown in FIG. 16. For specific descriptions, refer to descriptions in FIG. 14. Details are not described herein again.

For the third implementation shown in FIG. 16, possible execution manners in different scenarios are as follows.

### (1) Multicast service activation

Optionally, in this scenario, the access control procedure is first performed. If the terminal device is barred from accessing, the terminal device determines, based on a case in which the network device does not provide the multicast service for the terminal device in the non-connected mode, to perform the access control procedure. To enable all paged terminal devices to access, a barring parameter of access control may be set to allow all the paged terminal devices to access. For a specific setting manner, refer to descriptions in step 3 in FIG. 14. Details are not described herein again.

Optionally, in this scenario, it may also be stipulated that if the reason why the terminal device is released to the non-connected mode is deactivation, the terminal device ignores content implicitly indicated by the group paging message, and directly performs the RRC connection control procedure or the access control procedure.

### (2) Multicast service release

In a multicast service release scenario, it should be ensured that the terminal device can access the network device as much as possible. Normally, when the core network triggers the multicast service release, the network device does not provide the multicast service for the terminal device in the non-connected mode. Therefore, when the group paging message is sent due to the multicast service release, the second information in the group paging message may indicate that the network device does not provide the multicast service for the terminal device in the non-connected mode. In an implementation corresponding to FIG. 16, the terminal device first performs access control, and if the access control is rejected, the terminal device monitors whether configuration information corresponding to the multicast service exists. For example, to enable all terminal devices to access, for a specific setting manner, refer to descriptions in step 3 in FIG. 14. Details are not described herein again.

### (3) Congestion relief (complete)

When congestion in the network device is completely relieved, the terminal device should return to the connected mode as much as possible to receive the multicast service. For example, in this scenario, to enable all terminal devices to access, for a specific setting manner, refer to descriptions in step 3 in FIG. 14. Details are not described herein again.

### (4) Congestion relief (partial)

When the network device has some resources that can be used to provide a multicast service in the connected mode, some terminal devices in the group of paged terminal devices should be controlled to access the network device. In this scenario, a desired effect can be implemented provided that the network device configures a proper barring parameter of access control for the terminal device.

It should be understood that, in this case, the network device further provides the multicast service for the group of paged terminal devices in the non-connected mode, so that the terminal device receives the multicast service when the terminal device is barred from accessing. In an implementation corresponding to FIG. 16, if the terminal device performs UAC access determining after receiving the group paging message, some terminal devices are allowed to perform access, and some terminal devices are barred from accessing. For example, the terminal devices in the non-connected mode that are barred from accessing may then determine, based on a PDCCH of an MCCH that is obtained through monitoring, to receive the multicast service or perform the RRC connection control procedure in the non-connected mode.

According to this embodiment, for the terminal device entering the non-connected mode, the access control procedure is enhanced, so that some terminal devices can receive the multicast service in the non-connected mode, and some terminal devices enter the connected mode to receive the multicast service, to avoid network congestion caused by simultaneous access of a large quantity of terminal devices, and effectively manage access of the terminal devices.

The foregoing provides descriptions by using an example in which the first information and the second information are carried in the group paging message. The following continues to describe the foregoing method by using an example in which the first information and the second information are carried on the MCCH. The method includes the following steps.

S1801: The network device sends the first information and the second information to the terminal device, where the first information and the second information are carried on the MCCH. Correspondingly, the terminal device receives the first information and the second information from the network device. The first information is used to page a group of terminal devices to receive the first multicast service, the group of terminal devices include the terminal device that receives the first information, and the second information indicates whether the network device provides the first multicast service for the terminal device in the non-connected mode.

Optionally, the first information on the MCCH may be understood as wake-up information in the first implementation of S1302.

S1802: The terminal device performs, based on the first information and second information, at least one of the following: receiving the first multicast service in the non-connected mode; or performing an RRC connection control procedure.

For detailed descriptions of S1802, refer to S1302. Details are not described herein again.

It should be understood that, it can be learned from the foregoing description that before performing the RRC connection control procedure, the terminal device usually first needs to perform the access control procedure. The following continues to describe several possible implementations of S1802 with reference to FIG. 14, FIG. 15, and FIG. 16.

FIG. 14 may also be considered as a flowchart of the first implementation of S1802. In this implementation, the terminal device determines, based on the second information, to receive the first multicast service in the non-connected mode; or performs the RRC connection control procedure. This implementation may specifically include the following steps.

Step 1: The terminal device determines, based on the second information, whether the network device provides the first multicast service for the terminal device in the non-connected mode.

Step 2: The terminal device starts to perform the UAC access control procedure. Then, the terminal device performs step 3.

Step 3: The terminal device determines whether the terminal device is allowed to perform access.

Optionally, if the terminal device is allowed to perform access, the terminal device performs the RRC connection control procedure.

Optionally, if the terminal device is barred from accessing, the terminal device performs step 4.

Step 4: The terminal device determines first duration based on barring time in the barring parameter, and then starts a first timer. Running time of the first timer is the first duration. The terminal device is barred from re-initiating the access control procedure before the first timer expires. After the first timer expires, the terminal device performs step 2, that is, performs the access control procedure again.

For other descriptions of step 1 to step 4 and application of the implementation in different scenarios, refer to descriptions of FIG. 14 in S1302. Details are not described herein again.

FIG. 15 may also be considered as a flowchart of the second implementation of S1802. A difference from the second implementation of S1802 lies in that, in this implementation, the terminal device first performs an access control UAC procedure after receiving the group paging message, and determines a subsequent step based on the second information after the terminal device is not allowed to perform access. This implementation may include the following steps.

Step 1: The terminal device starts to perform the access control procedure. Then, the terminal device performs step 2.

Step 2: The terminal device determines whether the terminal device is allowed to perform access.

Optionally, if the terminal device is allowed to perform access, the terminal device performs the RRC connection control procedure.

Optionally, if the terminal device is barred from accessing, after being barred from accessing, the terminal device needs to determine second duration based on barring time of a barring parameter, where the second duration is running time of a second timer. It should be noted that, in this implementation, the terminal device needs to first perform step 3 before determining whether to start the second timer.

Step 3: The terminal device determines, based on the second information, whether the network device provides the first multicast service for the terminal device in the non-connected mode.

Optionally, if the second information indicates that the network device provides the first multicast service for the terminal device in the non-connected mode, the terminal device does not start the second timer, and the terminal device monitors a PDCCH corresponding to an MCCH in the non-connected mode to obtain configuration information of the first multicast service. Then, the terminal device receives the first multicast service in the non-connected mode based on the obtained multicast configuration information of the first multicast service.

Optionally, if the second information indicates that the network device does not provide the first multicast service for the terminal device in the non-connected mode, step 4 is performed.

Step 4: The terminal device starts the second timer. The terminal device is barred from re-initiating the access control procedure before the second timer expires. After the second timer expires, step 1 is performed, and the terminal device re-initiates the access control procedure.

For other descriptions of step 1 to step 4 and application of the implementation in different scenarios, refer to descriptions of FIG. 15 in S1302. Details are not described herein again.

FIG. 16 may also be considered as a flowchart of the third implementation of S1802. In this implementation, the network device does not send the second information, that is, in this manner, that the MCCH does not carry the second information implicitly indicates that the network device does not provide the first multicast service for the terminal device in the non-connected mode. This implementation may include the following steps.

Step 1: When the MCCH does not indicate whether to provide the first multicast service in the non-connected mode, the terminal device starts to perform the access control procedure. Then, the terminal device performs step 2.

Step 2: The terminal device determines whether the terminal device is allowed to perform access.

Optionally, if the terminal device is allowed to perform access, the terminal device performs the RRC connection control procedure.

Optionally, if the terminal device is barred from accessing, the terminal device performs step 3.

Step 3: The terminal device determines third duration based on barring time of a barring parameter of access control, and then the terminal device starts a third timer. Running time of the third timer is the third duration.

It should be understood that, the terminal device is barred from re-initiating the access control procedure before the third timer expires. After the third timer expires, the terminal device performs step 1, that is, performs the access control procedure again.

For other descriptions of step 1 to step 3 and application of the implementation in different scenarios, refer to descriptions of FIG. 16 in S1302. Details are not described herein again.

Optionally, the first information and the second information may be further separately carried in any one of a group paging message, a unicast paging message, an MCCH message, a system message, and a message (MSG 2/4/B) in a random access procedure, or may be jointly carried in one of the foregoing messages. This is not limited in this application. For a specific implementation procedure, refer to the foregoing description. Details are not described herein again.

It should be understood that the sequence numbers of the foregoing processes do not mean execution sequences. The execution sequences of the processes should be determined based on functions and internal logic of the processes, and should not constitute any limitation on implementation processes of embodiments of this application.

It should be further understood that in various embodiments of this application, unless otherwise specified or there is a logic conflict, terms and/or descriptions in different embodiments are consistent and may be mutually referenced, and technical features in different embodiments may be combined based on an internal logical relationship thereof, to form a new embodiment.

It should be further understood that, in some of the foregoing embodiments, a device in an existing network architecture is mainly used as an example for description. It should be understood that, a specific form of the device is not limited in embodiments of this application. For example, all devices that can implement a same function in the future are applicable to embodiments of this application.

It may be understood that, in the foregoing method embodiments, methods and operations implemented by a device (such as the terminal device or the network device) may also be implemented by a component (such as a chip or a circuit) of the device.

The foregoing describes in detail the method provided in embodiments of this application with reference to FIG. 12 and FIG. 16. The foregoing method is mainly described from a perspective of interaction between the terminal device and the network device. It may be understood that, to implement the foregoing functions, the terminal device and the network device include corresponding hardware structures and/or software modules for performing each function.

A person skilled in the art should be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

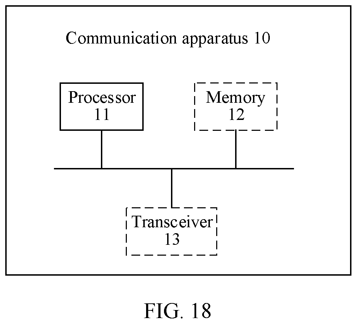

The following describes in detail communication apparatuses provided in embodiments of this application with reference to FIG. 17 and FIG. 18. It should be understood that, descriptions of apparatus embodiments correspond to the descriptions of the method embodiments. Therefore, for content that is not described in detail, refer to the method embodiments. For brevity, some content is not described herein again. In embodiments of this application, division into functional modules may be performed on the terminal device or the network device based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used. The following provides description by using an example in which each functional module is obtained through division based on each corresponding function.

FIG. 17 is a block diagram of a communication apparatus 1000 according to this application.

In a possible design, the communication apparatus 1000 includes a receiving unit 1100 and a processing unit 1200. The communication apparatus 1000 may implement steps or procedures that are performed and that correspond to the terminal device in the foregoing method embodiments. For example, the communication apparatus 1000 may be a terminal device, or may be a chip or a circuit in the terminal device. The receiving unit 1100 is configured to perform a receiving-related operation of the terminal device in the foregoing method embodiments, and the processing unit 1200 is configured to perform a processing-related operation of the terminal device in the foregoing method embodiments.

In a possible implementation, the processing unit 1200 is configured to join a multicast service when a terminal device is in a radio resource control RRC connected mode; the receiving unit 1100 is configured to receive first information from the network device when the terminal device is in the RRC connected mode, where the first information indicates a multicast radio bearer MRB configuration, and the MRB configuration is an MRB configuration used by the terminal device to receive the multicast service in an RRC non-connected mode; and the processing unit 1200 is further configured to determine the MRB configuration based on the first information.

Optionally, the receiving unit 1100 is further configured to receive second information from the network device when the terminal device is in the RRC connected mode, where the second information indicates the terminal device to receive the multicast service in the RRC non-connected mode; the processing unit 1200 is further configured to enable the terminal device to enter the RRC non-connected mode; and the receiving unit 1100 is configured to receive, when the terminal device is in the RRC non-connected mode, the multicast service by using the MRB configuration.

Optionally, the first information is used to trigger the terminal device to obtain the MRB configuration, and the processing unit 1200 is specifically configured to: monitor, based on the first information, a physical downlink control channel PDCCH corresponding to a multicast control channel; and determine the MRB configuration carried on the multicast control channel.

Optionally, the first information indicates the terminal device to receive, when the terminal device is in the RRC non-connected mode, the multicast service by using an MRB configuration used by the terminal device to receive the multicast service in the RRC connected mode, and the processing unit 1200 is specifically configured to: determine, based on the first information, that the MRB configuration used by the receiving unit to receive the multicast service in the RRC connected mode is the MRB configuration.

In another possible implementation, the receiving unit 1100 is configured to receive a group paging message from a network device, where the group paging message includes first information, the first information is used to page a group of terminal devices to receive a first multicast service, and the group of terminal devices include a terminal device; and the processing unit 1200 is configured to perform at least one of the following based on the first information and second information, where the second information indicates whether the network device provides the first multicast service for the group of terminal devices in a radio resource control RRC non-connected mode: enabling the receiving unit to receive the first multicast service in the RRC non-connected mode; or performing, by the processing unit, an RRC connection control procedure.

Optionally, if the second information indicates that the network device provides the first multicast service for the group of terminal devices in the RRC non-connected mode, the receiving unit 1100 receives the first multicast service when the terminal device is in the RRC non-connected mode; or the processing unit 1200 initiates an access control procedure based on the first information, and if the terminal device is not allowed to access the network device, and the second information indicates that the network device provides the first multicast service for the group of terminal devices in the RRC non-connected mode, the receiving unit 1100 receives the first multicast service when the terminal device is in the RRC non-connected mode.

Optionally, the processing unit 1200 performs the RRC connection control procedure if the second information indicates that the network device does not provide the first multicast service for the group of terminal devices in the RRC non-connected mode; or the processing unit 1200 initiates an access control procedure based on the first information, and the processing unit 1200 performs the RRC connection control procedure if the terminal device is allowed to access the network device.

Optionally, the processing unit 1200 is further configured to monitor, within running time of a first timer, a physical downlink control channel PDCCH corresponding to a multicast control channel, to obtain the second information, where duration of the first timer is duration that the terminal device needs to wait before initiating the access control procedure again after the terminal device is not allowed to access the network device; and the processing unit 1200 is further configured to stop the first timer, and/or stop initiating the access control procedure; or the group paging message includes the second information, and the processing unit 1200 is further configured to skip starting the first timer, and/or stop initiating the access control procedure.

Optionally, the communication apparatus 1000 further includes a sending unit 1300. The sending unit 1300 and the receiving unit 1100 may be integrated into one transceiver unit, and have both a receiving function and a sending function. This is not limited herein.

Optionally, in an implementation in which the communication apparatus 1000 is the terminal device in the method embodiment, the sending unit 1300 may be a transmitter, and the receiving unit 1100 may be a receiver. The receiver and the transmitter may also be integrated into one transceiver. The processing unit 1200 may be a processing apparatus.

A function of the processing apparatus may be implemented by hardware, or may be implemented by hardware executing corresponding software. For example, the processing apparatus may include a memory and a processor. The memory is configured to store a computer program, and the processor reads and executes the computer program stored in the memory, to enable the communication apparatus 1000 to perform operations and/or processing performed by the terminal device in the method embodiments. Optionally, the processing apparatus may include only a processor, and a memory configured to store a computer program is located outside the processing apparatus. The processor is connected to the memory via a circuit/wire, to read and execute the computer program stored in the memory. For another example, the processing apparatus may be a chip or an integrated circuit.

Optionally, in an implementation in which the communication apparatus 1000 is a chip or an integrated circuit installed in a terminal device, the sending unit 1300 and the receiving unit 1100 may be a communication interface or an interface circuit. For example, the sending unit 1300 is an output interface or an output circuit, and the receiving unit 1100 is an input interface or an input circuit. The processing unit 1200 may be a processor or a microprocessor integrated on the chip or the integrated circuit. This is not limited herein.

In another possible design, the communication apparatus 1000 includes a processing unit 1200 and a sending unit 1300. The communication apparatus 1000 may implement steps or procedures that are performed and that correspond to the network device in the foregoing method embodiments. For example, the communication apparatus 1000 may be a network device, or may be a chip or a circuit in the network device. The processing unit 1200 is configured to perform processing-related operations of the network device in the foregoing method embodiments. The sending unit 1300 is configured to perform receiving-related operations of the network device in the foregoing method embodiments.

In a possible implementation, the processing unit 1200 is configured to determine that a terminal device joins a multicast service; and the sending unit 1300 is configured to send first information to the terminal device in a radio resource control RRC connected mode, where the first information indicates a multicast radio bearer MRB configuration, and the MRB configuration is an MRB configuration used by the terminal device to receive the multicast service in an RRC non-connected mode.

Optionally, the sending unit 1300 is further configured to send second information to the terminal device, where the second information indicates the terminal device to enter the RRC non-connected mode to receive the multicast service.

Optionally, the processing unit 1200 is further configured to determine that the MRB configuration is an MRB configuration used by the terminal device to receive the multicast service in the RRC connected mode; and the sending unit 1300 is further configured to send the first information to the terminal device in the connected mode, where the first information indicates the terminal device to receive, when the terminal device is in the RRC non-connected mode, the multicast service by using the MRB configuration used by the terminal device to receive the multicast service in the RRC connected mode.

Optionally, the apparatus 1000 further includes a receiving unit 1100. The receiving unit 1100 is configured to perform receiving-related operations of the network device in the foregoing method embodiments. The receiving unit 1100 is configured to receive first indication information from a core network device, where the first indication information indicates priorities of one or more terminal devices; and the processing unit 1200 is further configured to determine, based on the first indication information, a terminal device that needs to be released to the non-connected mode to receive the multicast service.

Optionally, the sending unit 1300 and the receiving unit 1100 may be integrated into one transceiver unit, and have both a receiving function and a sending function. This is not limited herein.

In another possible implementation, the sending unit 1300 is configured to send a group paging message to a terminal device, where the group paging message includes first information, the first information is used to page a group of terminal devices to receive a first multicast service, and the group of terminal devices include the terminal device, where the sending unit 1300 is further configured to send second information to the terminal device, where the second information indicates whether a network device provides the first multicast service for the group of terminal devices in a radio resource control RRC non-connected mode.

Optionally, the second information is carried in the group paging message, or the second information is carried on a multicast control channel.

Optionally, the communication apparatus 1000 further includes a receiving unit 1100. The sending unit 1300 and the receiving unit 1100 may be integrated into one transceiver unit, and have both a receiving function and a sending function. This is not limited herein.

Optionally, in an implementation in which the communication apparatus 1000 is the network device in the method embodiment, the sending unit 1300 may be a transmitter, and the receiving unit 1100 may be a receiver. The receiver and the transmitter may also be integrated into one transceiver. The processing unit 1200 may be a processing apparatus.

A function of the processing apparatus may be implemented by hardware, or may be implemented by hardware executing corresponding software. For example, the processing apparatus may include a memory and a processor. The memory is configured to store a computer program, and the processor reads and executes the computer program stored in the memory, to enable the communication apparatus 1000 to perform operations and/or processing performed by the network device in the method embodiments. Optionally, the processing apparatus may include only a processor, and a memory configured to store a computer program is located outside the processing apparatus. The processor is connected to the memory via a circuit/wire, to read and execute the computer program stored in the memory. For another example, the processing apparatus may be a chip or an integrated circuit.

Optionally, in an implementation in which the communication apparatus 1000 is a chip or an integrated circuit installed in a network device, the sending unit 1300 and the receiving unit 1100 may be a communication interface or an interface circuit. For example, the sending unit 1300 is an output interface or an output circuit, and the receiving unit 1100 is an input interface or an input circuit. The processing unit 1200 may be a processor or a microprocessor integrated on the chip or the integrated circuit. This is not limited herein.

FIG. 18 is a diagram of a structure of a communication apparatus 10 according to this application. The apparatus 10 includes a processor 11. The processor 11 is coupled to a memory 12. The memory 12 is configured to store a computer program or instructions and/or data. The processor 11 is configured to: execute the computer program or the instructions stored in the memory 12, or read data stored in the memory 12, to perform the method in the foregoing method embodiments.

Optionally, there are one or more processors 11.

Optionally, there are one or more memories 12.

Optionally, the memory 12 and the processor 11 are integrated together, or are disposed separately.

Optionally, as shown in FIG. 18, the apparatus 10 further includes a transceiver 13. The transceiver 13 is configured to receive and/or send a signal. For example, the processor 11 is configured to control the transceiver 13 to receive and/or send a signal.

In a solution, the apparatus 10 is configured to implement operations performed by a terminal device in the foregoing method embodiments.

For example, the processor 11 is configured to execute the computer program or the instructions stored in the memory 12, to implement related operations performed by the terminal device in the foregoing method embodiments, for example, the method performed by the terminal device in the embodiment shown in FIG. 12 or FIG. 13.

In another solution, the apparatus 10 is configured to implement operations performed by the network device in the foregoing method embodiments.

For example, the processor 11 is configured to execute the computer program or the instructions stored in the memory 12, to implement related operations performed by the network device in the foregoing method embodiments, for example, the method performed by the network device in the embodiment shown in FIG. 12 or FIG. 13.

In addition, this application further provides a computer-readable storage medium. The computer-readable storage medium stores computer instructions. When the computer instructions are run on a computer, operations and/or procedures performed by the terminal device or the network device in the method embodiments of this application are performed.

This application further provides a computer program product. The computer program product includes computer program code or instructions. When the computer program code or the instructions are run on a computer, operations and/or procedures performed by the terminal device or the network device in the method embodiments of this application are performed.

In addition, this application further provides a chip, where the chip includes a processor. A memory configured to store a computer program is disposed independent of the chip. The processor is configured to execute the computer program stored in the memory, so that an operation and/or processing performed by the terminal device or the network device in any method embodiment is performed.

Further, the chip may further include a communication interface. The communication interface may be an input/output interface, an interface circuit, or the like. Further, the chip may further include a memory.

In addition, this application further provides a communication system. The communication system includes the terminal device and the network device in embodiments of this application.

It should be understood that the processor in embodiments of this application may be an integrated circuit chip and has a signal processing capability. In the implementation process, each step of the foregoing method embodiment may be completed by using an integrated logical circuit of hardware in the processor or instructions in a form of software. The processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor, or the like. The steps in the methods disclosed in embodiments of this application may be directly performed and completed by a hardware encoding processor, or may be performed and completed by using a combination of hardware in the encoding processor and a software module. A software module may be located in a mature storage medium in the art, such as a random access memory, a flash memory, a read-only memory, a programmable read-only memory, an electrically erasable programmable memory, or a register. The storage medium is located in the memory. The processor reads information in the memory, and completes the steps of the foregoing methods in combination with hardware of the processor.

The memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

It should be noted that, when the processor is a general-purpose processor, a DSP, an ASIC, an FPGA or another programmable logic device, a discrete gate or a transistor logic device, or a discrete hardware component, the memory (storage module) may be integrated into the processor.

It should be further noted that, the memory described in this specification aims to include but is not limited to these memories and any memory of another proper type.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. It may be clearly understood by a person skilled in the art that, for the purpose of convenient and brief descriptions, for a detailed working process of the foregoing system, apparatus, and unit, refer to a corresponding process in the foregoing method embodiments. Details are not described herein again. In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form. The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments. In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes: any medium that can store program code, such as a USB flash drive, a removable hard disk, a ROM, a RAM, a magnetic disk, or an optical disc.

It should be understood that "an embodiment" mentioned in the entire specification means that particular features, structures, or characteristics related to the embodiment are included in at least one embodiment of this application. Therefore, embodiments in the entire specification do not necessarily refer to a same embodiment. In addition, these particular features, structures, or characteristics may be combined in one or more embodiments in any proper manner.

It should be further understood that ordinal numbers such as "first" and "second" in embodiments of this application are for distinguishing between a plurality of objects, but are not intended to limit a size, content, an order, a time sequence, priorities, importance of the plurality of objects, or the like. For example, the first information and the second information do not indicate a difference in an information amount, content, a priority, an importance degree, or the like.

It should be further understood that, in this application, both "when" and "if" mean that a network element performs corresponding processing in an objective situation, and are not intended to limit time, and the network element is not required to perform a determining action during implementation; and do not mean any other limitation.

It should be further understood that in this application, "at least one" means one or more, and "a plurality of" means two or more. "At least one of items (pieces)" or a similar expression thereof refers to one item (piece) or a plurality of items (pieces), namely, any combination of these items, including any combination of singular items (pieces) or plural items (pieces). For example, at least one of a, b, or c represents a, b, c, a and b, a and c, b and c, or a and b and c.

It should be further understood that, unless otherwise specified, a meaning similar to "an item includes one or more of the following: A, B, and C" in this application usually means that the item may be any one of the following: A; B; C; A and B; A and C; B and C; A, B and C; A and A; A, A and A; A, A and B; A, A and C; A, B and B; A, C and C; B and B, B, B and B, B, B and C, C and C; C, C and C, and other combinations of A, B, and C. The foregoing uses three elements A, B, and C as an example to describe optional items of the project. When the expression is "the item includes at least one of the following: A, B, ..., and X", that is, when there are more elements in the expression, the items that can be applied to the item may also be obtained according to the foregoing rules.

It should be further understood that, the term "and/or" in this application describes only an association relationship between associated objects, and represents that three relationships may exist. For example, A and/or B may represent the following cases: A exists alone, both A and B exist, and B exists alone, where A and B may be singular or plural. The character "/" generally indicates an "or" relationship between the associated objects. For example, A/B indicates A or B.

It should be further understood that, in embodiments of this application, "B corresponding to A" indicates that B is associated with A, and B may be determined based on A. However, it should be further understood that, determining B based on A does not mean that B is determined based on A only, and B may be determined based on A and/or other information.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a terminal device in a radio resource control RRC non-connected mode, a group paging message from a network device, wherein the group paging message comprises first information, the first information is used to page a group of terminal devices to receive a first multicast service, and the group of terminal devices comprise the terminal device; and
performing, by the terminal device, at least one of the following based on the first information and second information, wherein the second information indicates whether the network device provides the first multicast service for the group of terminal devices in the RRC non-connected mode:
receiving the first multicast service in the RRC non-connected mode; or
performing an RRC connection control procedure.

2. The method according to claim 1, wherein the determining, by the terminal device based on the first information and second information, to receive the first multicast service in the RRC non-connected mode comprises:
receiving, by the terminal device, the first multicast service in the RRC non-connected mode if the second information indicates that the network device provides the first multicast service for the group of terminal devices in the RRC non-connected mode; or
initiating, by the terminal device, an access control procedure based on the first information, and
receiving, by the terminal device, the first multicast service in the RRC non-connected mode if the terminal device is not allowed to access the network device, and the second information indicates that the network device provides the first multicast service for the group of terminal devices in the RRC non-connected mode.

3. The method according to claim 1, wherein the performing, by the terminal device, an RRC connection control procedure based on the first information and second information comprises:
performing, by the terminal device, the RRC connection control procedure if the second information indicates that the network device does not provide the first multicast service for the group of terminal devices in the RRC non-connected mode; or
initiating, by the terminal device, an access control procedure based on the first information, and performing, by the terminal device, the RRC connection control procedure if the terminal device is allowed to access the network device.

4. The method according to any one of claims 1 to 3, wherein
the second information is carried in the group paging message; or
the second information is carried on a multicast control channel.

5. The method according to claim 2, wherein if the terminal device is not allowed to access the network device, the method further comprises:
monitoring, by the terminal device within running time of a first timer, a physical downlink control channel PDCCH corresponding to a multicast control channel, to obtain the second information, wherein the running time of the first timer is duration that the terminal device needs to wait before initiating the access control procedure again after the terminal device is not allowed to access the network device; and
exiting, by the terminal device, the access control procedure, or stopping, by the terminal device, initiating the access control procedure after the first timer expires; or
when the group paging message comprises the second information, exiting, by the terminal device, the access control procedure, or skipping, by the terminal device, starting the first timer, or stopping, by the terminal device, initiating the access control procedure after the first timer expires, wherein the running time of the first timer is the duration that the terminal device needs to wait before initiating the access control procedure again after the terminal device is not allowed to access the network device.

6. A communication method, comprising:
sending, by a network device, a group paging message to a terminal device in a radio resource control RRC non-connected mode, wherein the group paging message comprises first information, the first information is used to page a group of terminal devices to receive a first multicast service, and the group of terminal devices comprise the terminal device; and
sending, by the network device, second information to the terminal device, wherein the second information indicates whether the network device provides the first multicast service for the group of terminal devices in the RRC non-connected mode.

7. The method according to claim 6, wherein
the second information is carried in the group paging message; or
the second information is carried on a multicast control channel.

8. A communication method, comprising:
joining a multicast service when a terminal device is in a radio resource control RRC connected mode;
receiving first information from a network device when the terminal device is in the RRC connected mode, wherein the first information indicates a multicast radio bearer MRB configuration, and the MRB configuration is an MRB configuration used by the terminal device to receive the multicast service in an RRC non-connected mode; and
determining, by the terminal device, the MRB configuration based on the first information.

9. The method according to claim 8, wherein the method further comprises:
receiving second information from the network device when the terminal device is in the RRC connected mode, wherein the second information indicates the terminal device to receive the multicast service in the RRC non-connected mode;
entering, by the terminal device, the RRC non-connected mode; and
receiving, when the terminal device is in the RRC non-connected mode, the multicast service by using the MRB configuration.

10. The method according to claim 8 or 9, wherein the first information is used to trigger the terminal device to obtain the MRB configuration, and the determining, by the terminal device, the MRB configuration based on the first information comprises:
monitoring, by the terminal device based on the first information, a physical downlink control channel PDCCH corresponding to a multicast control channel; and
determining, by the terminal device, the MRB configuration carried on the multicast control channel.

11. The method according to claim 8 or 9, wherein the first information indicates the terminal device to receive, when the terminal device is in the RRC non-connected mode, the multicast service by using an MRB configuration used by the terminal device to receive the multicast service in the RRC connected mode; and
the determining, by the terminal device, the MRB configuration based on the first information comprises:
determining, by the terminal device based on the first information, that the MRB configuration used by the terminal device to receive the multicast service in the RRC connected mode is the MRB configuration.

12. A communication method, comprising:
determining, by a network device, that a terminal device joins a multicast service; and
sending, by the network device, first information to the terminal device in a radio resource control RRC connected mode, wherein the first information indicates a multicast radio bearer MRB configuration, and the MRB configuration is an MRB configuration used by the terminal device to receive the multicast service in an RRC non-connected mode.

13. The method according to claim 12, wherein the method further comprises:
sending, by the network device, second information to the terminal device, wherein the second information indicates the terminal device to enter the RRC non-connected mode to receive the multicast service.

14. The method according to claim 12 or 13, wherein the first information is used to trigger the terminal device to obtain the MRB configuration, and the method further comprises:
sending, by the network device, the MRB configuration to the terminal device, wherein the MRB configuration is carried in multicast control channel information.

15. The method according to claim 12 or 13, wherein the sending, by the network device, first information to the terminal device in an RRC connected mode comprises:
determining, by the network device, that the MRB configuration is an MRB configuration used by the terminal device to receive the multicast service in the RRC connected mode; and
sending, by the network device, the first information to the terminal device in the connected mode, wherein the first information indicates the terminal device to receive, when the terminal device is in the RRC non-connected mode, the multicast service by using the MRB configuration used by the terminal device to receive the multicast service in the RRC connected mode.

16. The method according to any one of claims 12 to 15, wherein the method further comprises:
receiving, by the network device, first indication information from a core network device, wherein the first indication information indicates priorities of one or more terminal devices; and
determining, by the network device based on the first indication information, a terminal device that needs to be released to the non-connected mode to receive the multicast service.

17. A communication apparatus, comprising:
a receiving unit, configured to receive a multicast service from a network device when a terminal device is in a radio resource control RRC connected mode, wherein
the receiving unit is further configured to receive first information from the network device when the terminal device is in the RRC connected mode, wherein the first information indicates a multicast radio bearer MRB configuration, and the MRB configuration is an MRB configuration used by the terminal device to receive the multicast service in an RRC non-connected mode; and
a processing unit, configured to determine the MRB configuration based on the first information.

18. The apparatus according to claim 17, wherein
the receiving unit is further configured to receive second information from the network device when the terminal device is in the RRC connected mode, wherein the second information indicates the terminal device to receive the multicast service in the RRC non-connected mode;
the processing unit is further configured to enable the terminal device to enter the RRC non-connected mode; and
the receiving unit is further configured to receive, when the terminal device is in the RRC non-connected mode, the multicast service by using the MRB configuration.

19. The apparatus according to claim 17 or 18, wherein the first information is used to trigger the terminal device to obtain the MRB configuration, and the processing unit is specifically configured to:
monitor, based on the first information, a physical downlink control channel PDCCH corresponding to a multicast control channel; and
determine the MRB configuration carried on the multicast control channel.

20. The apparatus according to claim 17 or 18, wherein the first information indicates the terminal device to receive, when the terminal device is in the RRC non-connected mode, the multicast service by using an MRB configuration used by the terminal device to receive the multicast service in the RRC connected mode, and the processing unit is specifically configured to:
determine, based on the first information, that the MRB configuration used by the receiving unit to receive the multicast service in the RRC connected mode is the MRB configuration.

21. A communication apparatus, comprising:
a sending unit, configured to send a multicast service to a terminal device in a radio resource control RRC connected mode, wherein
the sending unit is further configured to send first information to the terminal device in the RRC connected mode, wherein the first information indicates a multicast radio bearer MRB configuration, and the MRB configuration is an MRB configuration used by the terminal device to receive the multicast service in an RRC non-connected mode.

22. The apparatus according to claim 21, wherein the sending unit is further configured to send second information to the terminal device, wherein the second information indicates the terminal device to enter the RRC non-connected mode to receive the multicast service.

23. The apparatus according to claim 21 or 22, wherein the first information is used to trigger the terminal device to obtain the MRB configuration; and
the sending unit is further configured to send the MRB configuration to the terminal device, wherein the MRB configuration is carried on a multicast control channel.

24. The apparatus according to claim 21 or 22, wherein the apparatus further comprises:
a processing unit, configured to determine that the MRB configuration is an MRB configuration used by the terminal device to receive the multicast service in the RRC connected mode; and
the sending unit is further configured to send the first information to the terminal device in the connected mode, wherein the first information indicates the terminal device to receive, when the terminal device is in the RRC non-connected mode, the multicast service by using the MRB configuration used by the terminal device to receive the multicast service in the RRC connected mode.

25. The apparatus according to any one of claims 21 to 24, wherein the apparatus further comprises:
a receiving unit, configured to receive first indication information from a core network device, wherein the first indication information indicates priorities of one or more terminal devices; and
the processing unit is further configured to determine, based on the first indication information, a terminal device that needs to be released to the non-connected mode to receive the multicast service.

26. A communication apparatus, comprising:
a receiving unit, configured to receive a group paging message from a network device, wherein the group paging message comprises first information, the first information is used to page a group of terminal devices to receive a first multicast service, and the group of terminal devices comprise a terminal device; and
a processing unit, configured to perform at least one of the following based on the first information and second information, wherein the second information indicates whether the network device provides the first multicast service for the group of terminal devices in a radio resource control RRC non-connected mode:
enabling the receiving unit to receive the first multicast service in the RRC non-connected mode; or
performing, by the processing unit, an RRC connection control procedure.

27. The apparatus according to claim 26, wherein
if the second information indicates that the network device provides the first multicast service for the group of terminal devices in the RRC non-connected mode, the receiving unit receives the first multicast service when the terminal device is in the RRC non-connected mode; or
the processing unit initiates an access control procedure based on the first information, and
if the terminal device is not allowed to access the network device, and the second information indicates that the network device provides the first multicast service for the group of terminal devices in the RRC non-connected mode, the receiving unit receives the first multicast service when the terminal device is in the RRC non-connected mode.

28. The apparatus according to claim 26, wherein
the processing unit performs the RRC connection control procedure if the second information indicates that the network device does not provide the first multicast service for the group of terminal devices in the RRC non-connected mode; or
the processing unit initiates an access control procedure based on the first information, and the processing unit performs the RRC connection control procedure if the terminal device is allowed to access the network device.

29. The apparatus according to any one of claims 26 to 28, wherein the second information is carried in the group paging message, or the second information is carried on a multicast control channel.

30. The apparatus according to claim 27, wherein
the processing unit is further configured to monitor, within running time of a first timer, a physical downlink control channel PDCCH corresponding to a multicast control channel, to obtain the second information, wherein the running time of the first timer is duration that the terminal device needs to wait before initiating the access control procedure again after the terminal device is not allowed to access the network device; and
the processing unit is further configured to exit the access control procedure, or stop initiating, by the terminal device, the access control procedure after the first timer expires; or
when the group paging message comprises the second information, the processing unit exits the access control procedure, or skips starting the first timer, or stops initiating the access control procedure after the first timer expires, wherein the running time of the first timer is the duration that the terminal device needs to wait before initiating the access control procedure again after the terminal device is not allowed to access the network device.

31. A communication apparatus, comprising:
a sending unit, configured to send a group paging message to a terminal device, wherein the group paging message comprises first information, the first information is used to page a group of terminal devices to receive a first multicast service, and the group of terminal devices comprise the terminal device, wherein
the sending unit is further configured to send second information to the terminal device, wherein the second information indicates whether a network device provides the first multicast service for the group of terminal devices in a radio resource control RRC non-connected mode.

32. The apparatus according to claim 31, wherein the second information is carried in the group paging message, or the second information is carried on a multicast control channel.

33. A communication apparatus, wherein the communication apparatus comprises at least one processor and at least one memory, the at least one memory is configured to store a computer program or instructions, and the at least one processor is configured to execute the computer program or the instructions in the memory, to enable the method according to any one of claims 1 to 5 to be performed, or to enable the method according to any one of claims 8 to 11 to be performed.

34. A communication apparatus, wherein the communication apparatus comprises at least one processor and at least one memory, the at least one memory is configured to store a computer program or instructions, and the at least one processor is configured to execute the computer program or the instructions in the memory, to enable the method according to claim 6 or 7 to be performed, or to enable the method according to any one of claims 12 to 16 to be performed.

35. A computer-readable storage medium, wherein the computer-readable storage medium stores computer instructions; and when the computer instructions are run on a computer, the method according to any one of claims 1 to 5 is performed, or the method according to any one of claims 8 to 11 is performed.

36. A computer-readable storage medium, wherein the computer-readable storage medium stores computer instructions; and when the computer instructions are run on a computer, the method according to claim 6 or 7 is performed, or the method according to any one of claims 12 to 16 is performed.

37. A computer program product, wherein the computer program product comprises computer program code; and when the computer program code is run on a computer, the method according to any one of claims 1 to 5 is performed, or the method according to any one of claims 8 to 11 is performed.

38. A computer program product, wherein the computer program product compri ses computer program code; and when the computer program code is run on a computer, the method according to claim 6 or 7 is performed, or the method according to any one of claims 12 to 16 is performed.
